# EUROPÄISCHE PATENTSCHRIFT

(11) **EP 3 442 823 B1**
(45) Veröffentlichungstag und Bekanntmachung des Hinweises auf die Patenterteilung: **25.08.2021**
(21) Anmeldenummer: 17717354.9
(22) Anmeldetag: 06.04.2017
(51) Int. Cl.: H02J 3/32, B60L 53/63, B60L 55/00

(54) **ELEKTROFAHRZEUG MIT NETZRÜCKSPEISUNG UND BEREITSTELLUNG VON REGELLEISTUNG**
ELECTRIC VEHICLE WITH FEEDBACK TO THE POWER SUPPLY SYSTEM AND PROVISION OF CONTROL POWER
VÉHICULE ÉLECTRIQUE À RÉCUPÉRATION D'ÉNERGIE ET APTE À FOURNIR UNE PUISSANCE DE RÉGULATION

(30) Priorität: 14.04.2016 DE 102016206256
(43) Veröffentlichungstag der Anmeldung: 20.02.2019
(73) Patentinhaber: Lichtblick SE, 20359 Hamburg (DE)
(72) Erfinder: BAUMBUSCH, Katharina, 20359 Hamburg (DE); EBERHARDT, Tim, 22763 Hamburg (DE); SCHLUTTER, Jörg, 21073 Hamburg (DE)
(74) Vertreter: Eisenführ Speiser
(86) Internationale Anmeldenummer: PCT/EP2017/058227
(87) Internationale Veröffentlichungsnummer: WO 2017/178324

(56) Entgegenhaltungen:
- WO-A1-2015/081740
- DE-A1-102009 043 380
- US-A1- 2010 179 704
- US-A1- 2011 196 692
- US-A1- 2011 202 192
- US-A1- 2012 095 830
- US-A1- 2013 138 285
- US-A1- 2014 200 724
- US-A1- 2014 203 077

## Beschreibung

Die Erfindung betrifft ein Verfahren und ein System zum Erbringen einer Regelleistung für ein elektrisches Energieversorgungsnetz mit einer Mehrzahl von Energieerzeugern, einer Mehrzahl von Energieabnehmern und einer Poolsteuerungseinheit.

Energieversorgungsnetze haben die Aufgabe, Energie von einem Energieerzeuger zu einem Energieverbraucher zu übertragen. Hierfür ist es unter anderem notwendig, Strom von einer Mehrzahl von Energieerzeugern auf eine Vielzahl von Nutzern, also Energieabnehmern zu verteilen. Energieabnehmer sind beispielsweise Haushalte oder Industrieunternehmen. Da es technisch nur schwer möglich ist, Strom über einen längeren Zeitraum zu speichern, muss die Stromerzeugung und die Stromspeicherung für den zukünftigen Verbrauch geplant und bereitstellt werden. Der zukünftige Verbrauch kann dabei naturgemäß nur prognostiziert werden. Besonders im Bereich erneuerbarer Energien kann es bei der Stromerzeugung zu ungeplanten Schwankungen kommen. Beispielsweise kann die Höhe des Stroms aus Wind- oder Sonnenenergie nur begrenzt vorhergesagt werden. Weiter kann auch der Stromverbrauch, bedingt durch sich ständig änderndes Nutzerverhalten, nur begrenzt prognostiziert werden. Außerdem können technische Störungen zu plötzlichen und ungeplanten Reduzierungen oder Erhöhungen des Stromverbrauchs führen.

Mit einer Laststeuerung wird die Nachfrage nach netzgebundenen Dienstleistungen bei Energieabnehmern in Industrie und privaten Haushalten gesteuert. Durch verschiedene Entwicklungen in der Energiewirtschaft wird die intelligente Laststeuerung zunehmend attraktiv für Netzbetreiber und Endkunden. Bei Engpässen in der Stromerzeugung oder großem Bedarf an elektrischer Energie oder bei Störungen des Netzbetriebs können durch Fernsteuerung Elektrizität verbrauchende Geräte durch Lastabwurf ab- und wieder zugeschaltet werden.

In Energieversorgungsnetzen führt eine Abweichung von Leistungserzeugung zu Schwankungen der Netzfrequenz. Es gehört zu den Aufgaben der Leitwarte des Netzbetreibers, die Systemdienstleistung "Frequenzhaltung" zu erbringen. Im Fall eines Leistungsdefizites kommt es im Netz zu einer fallenden Frequenz, die mit positiver Regelleistung ausgeglichen wird. Bei einem Leistungsüberschuss muss Energie aus dem Netz genommen werden. Dies wird durch Erbringung von negativer Regelleistung ausgeglichen. Technisch wird die Regelleistung in die Märkte für primäre, für sekundäre Regelleistung und für Minutenreserve eingeteilt. Diese unterscheiden sich insbesondere in ihrer Aktivierungsgeschwindigkeit, der Abrufdauer und Abrufhäufigkeit.

Im Stand der Technik, beispielsweise aus der DE 10 2011 055225 A1, ist ein Verfahren zur Bereitstellung von Regelleistung für ein Stromnetz bekannt, bei dem ein an das Stromnetz angeschlossener Energieerzeuger dem Stromnetz nach Bedarf Energie zuführt oder ein an das Stromnetz angeschlossener Energieverbraucher aus dem Stromnetz nach Bedarf Energie aufnimmt. Hierbei wird ein Energieerzeuger oder ein Energieverbraucher gemeinsam mit einem an das Stromnetz angeschlossenen Energiespeicher zur Bereitstellung der Regelleistung betrieben. Der Energiespeicher gibt ab einem ersten Zeitpunkt zumindest die Differenz der von dem Energieerzeuger bereitgestellten Leistung zu einer Nennleistung an das Stromnetz ab. Alternativ nimmt der Energiespeicher der von dem Energieverbraucher aufgenommenen Leistung zu einer Nennleistung aus dem Stromnetz auf. Der Energiespeicher stellt so lange zumindest diese Differenz zwischen der Nennleistung und der vom Energieerzeuger bereitgestellten Leistung oder der vom Energieverbraucher aufgenommenen Leistung bereit, bis die Leistung des Energieerzeugers oder des Energieverbrauchers die Nennleistung zu einem zweiten Zeitpunkt erreicht. Nachteilig an diesem Verfahren ist jedoch, dass der Energiespeicher immer passend auf akute Leistungsschwankungen reagieren und Leistungen erbringen oder aufnehmen muss. Es hat sich gezeigt, dass eine Vielzahl von möglichen Energiespeichern hierzu nur schlecht in der Lage sind, da sie nur verzögert auf Leistungsänderungen reagieren können.

Dies macht eine zukünftige Planungssicherheit mit solchen Energiespeichern unmöglich.

Weiterer relevanter Stand der Technik wird gebildet durch die Dokumente:
US 2013/138285 A1 (BOZCHALUI MOHAMMAD CHEHREGHANI [US] ET AL) 30. Mai 2013 (2013-05-30);
US 2010/179704 A1 (OZOG MICHAEL T [US]) 15. Juli 2010 (2010-07-15); DE 10 2009 043380 A1 (EWE AG [DE]) 7. April 2011 (2011-04-07); US 2014/200724 A1 (SORTOMME ERIC [US]) 17. Juli 2014 (2014-07-17);
US 2014/203077 A1 (GADH RAJIT [US] ET AL) 24. Juli 2014 (2014-07-24).

Die Aufgabe der Erfindung besteht darin, Leistungsaufnahmen und Leistungsabgaben für einen zukünftigen Zeitpunkt eines Energiespeichers genauer zu prognostizieren und diese Leistung dem Netzbetreiber für einen beliebigen zukünftigen Zeitpunkt anbieten zu können.

Die Aufgabe wird bei einem Verfahren der eingangs genannten Art gelöst, durch:
- Bereitstellen eines Gesamtenergiespeichers, das aus einer Mehrzahl von bidirektional an das elektrische Energieversorgungsnetz koppelbaren Elektrofahrzeugen mit jeweils mindestens einem Energiespeicher besteht;
- Bestimmen, zu einem ersten Zeitpunkt, der vor einem zweiten Zeitpunkt liegt, einer Ist-Leistung des Gesamtenergiespeichers zu dem zweiten Zeitpunkt als die Summe einer prognostizierten Leistung einer ersten Gruppe von Elektrofahrzeugen zu dem zweiten Zeitpunkt und einer prognostizierten Leistung einer zweiten Gruppe von Elektrofahrzeugen zu dem zweiten Zeitpunkt, wobei die erste Gruppe diejenigen Elektrofahrzeuge umfasst, deren Stromfluss betragsmäßig und richtungsmäßig von der Poolsteuerungseinheit verändert werden kann und deren Energiespeicher zum jeweiligen Zeitpunkt steuerbar an das elektrische Energieversorgungsnetz gekoppelt sind, um einen Stromfluss zwischen den entsprechenden Energiespeichern und dem elektrischen Energieversorgungsnetz zu verändern und die zweite Gruppe diejenigen Elektrofahrzeuge umfasst, die nicht in der ersten Gruppe sind, wobei der Gesamtenergiespeicher (7) über Eingabegeräte (16) zum Festlegen einer reservierten Kapazität verfügt, wobei jedes Elektrofahrzeug, durch Festlegen eines Nutzers des Elektrofahrzeugs, jederzeit zwischen der ersten und zweiten Gruppe (107b) wechseln kann, und wobei der Nutzer des Elektrofahrzeugs über ein Belohnungssystem motiviert wird, so oft wie möglich das Elektrofahrzeug der ersten Gruppe (107a) zuzuordnen;
- Bestimmen, zu dem ersten Zeitpunkt, einer maximal möglichen Entladeleistung des Gesamtenergiespeichers zu dem zweiten Zeitpunkt als die Summe einer prognostizierten maximal möglichen Entladeleistung der ersten Gruppe von Elektrofahrzeugen zu dem zweiten Zeitpunkt und einer prognostizierten maximal möglichen Entladeleistung der zweiten Gruppe von Elektrofahrzeugen zu dem zweiten Zeitpunkt;
- Bestimmen, zu dem ersten Zeitpunkt, einer gesicherten Regelleistung in positiver Richtung zu dem zweiten Zeitpunkt als Differenz aus der Ist-Leistung des Gesamtenergiespeichers zu dem zweiten Zeitpunkt und der minimal möglichen Leistung des Gesamtenergiespeichers zu dem zweiten Zeitpunkt.

Der Erfindung liegt zu Grunde, dass nur schwer Stromreserven angelegt werden können. Das sich ständig ändernde Nutzerverhalten erfordert jedoch, Stromflüsse beliebiger Richtung schnell den Gegebenheiten anpassen und für zukünftige Ereignisse vorhersagen zu können. Der Erfindung liegt demzufolge die Motivation zu Grunde, bestehende elektrische Energieversorgungsnetze für gegenwärtige und zukünftige Zeitpunkte besser zu stabilisieren.

DE 10 331084 A1 offenbart bereits ein Elektrofahrzeug mit einem Elektromotor und einem Energiespeicher zum Bereitstellen von Antriebsenergie für den Elektromotor. Das Elektrofahrzeug hat einen an den Energiespeicher angeschlossenen Steckverbinder zum Anschluss an eine Stromquelle und eine Steuerung zum Steuern des Stromflusses von der Stromquelle zum Energiespeicher. Gerade bei Elektrofahrzeugen besteht allerdings das Problem, dass deren Verfügbarkeit am Netz schwer vorhersagbar ist, denn der Hauptzweck ist deren mobile Nutzung. Erfahrungsgemäß ist es durch eine Betrachtung der Gesamtheit der Elektrofahrzeuge als ein Gesamtenergiespeicher erfindungsgemäß darüber hinaus möglich, mit mehreren Einheiten im Zusammenschluss als "Poolbatterie" am Regelleistungsmarkt teilzunehmen. So können auch private Nutzer von zum Beispiel Elektrofahrzeugen in die Erbringung von Regelleistung mit einbezogen werden. Vorteilhaft spielen herkömmliche Energiespeicher, wie zum Beispiel Pumpspeicherkraftwerke, eine weniger relevante Rolle, Netzstabilität zu garantieren.

Die Erfindung beschreibt ein Verfahren die Systemdienstleistung "Regelleistung" durch einen Gesamtenergiespeicher zu erbringen. Dabei soll die Randbedingung eingehalten werden, dass der Mobilitätswunsch des Nutzers durch die Veränderung der Ladeleistung und das zeitweise Entladen nicht beeinträchtigt wird.

Vereinfacht dargestellt, besteht ein elektrisches Energieversorgungsnetz aus vielen Energieerzeugern, als Beispiel sind Solarenergie, Wasserkraft oder Windenergie zu nennen, aber weitere erneuerbare Energieformen sind denkbar. Als Energieabnehmer werden im Folgenden sämtliche Instanzen betrachtet, die selbst Energie benötigen. Private Haushalte, industrielle Fertigungsanlagen und viele weitere Energieverbraucher kommen hierbei zum Tragen.

Als Elektrofahrzeuge werden im Folgenden Kraftfahrzeuge bezeichnet, die mit einem mit Strom aus dem elektrischen Energieversorgungsnetz ladbaren Energiespeicher ausgestattet sind, welcher einen Elektromotor antreibt. Als Elektrofahrzeuge werden weiter im Folgenden Kraftfahrzeuge bezeichnet, die mit einem mit Strom aus dem elektrischen Energieversorgungsnetz ladbaren Energiespeicher ausgestattet sind, welcher einen Elektromotor antreibt und die zusätzlich zum Energiespeicher mit einem Verbrennungsmotor ausgestattet sind. Das Verfahren der Erfindung ermöglicht es eine Vielzahl von Elektrofahrzeugen in die Stabilisierung des elektrischen Energieversorgungsnetzes mit einzubeziehen. Hierfür bilden die Elektrofahrzeuge einen Gesamtenergiespeicher, der von einer Poolsteuerungseinheit verwaltet wird. Jedes mit Strom zu ladende und von der Poolsteuerungseinheit steuerbare Gerät kann gemäß der Erfindung Teil des Gesamtenergiespeichers sein.

Für das erfindungsgemäße Verfahren ist es nötig, dass sich die Elektrofahrzeuge bidirektional an das elektrische Energieversorgungsnetz koppeln lassen. Die Poolsteuerungseinheit, ein sogenannter Aggregator, verwaltet den Gesamtenergiespeicher, das heißt eine Vielzahl der Elektrofahrzeuge, und eine Vielzahl der Ladestationen der Elektrofahrzeuge. Die Poolsteuerungseinheit ist mit dem Netzbetreiber verbunden. Über diese Verbindung können Daten und Leistungen, insbesondere durch Stromfluss, ausgetauscht werden. Das erfindungsgemäße Verfahren ermöglicht es der Poolsteuerungseinheit Regelleistungen in positive und/oder negative Richtung bereitzustellen und zu erbringen.

Weiter generiert die Poolsteuerungseinheit zu jedem Zeitpunkt ein aktuelles Bild eines jeden einzelnen Elektrofahrzeuges und somit des Gesamtenergiespeichers. Weiter kommuniziert die Poolsteuerungseinheit mittels einer SSL gesicherten Kommunikation Elektrofahrzeugdaten und Ladepläne mit dem Gesamtenergiespeicher.

Die Elektrofahrzeuge des Gesamtenergiespeichers werden in zwei Gruppen unterteilt. Die Definition der jeweiligen Gruppeneigenschaft ist zeitpunktunabhängig. Die erste Gruppe umfasst diejenigen Elektrofahrzeuge, die mit einem passenden Ladegerät verbunden sind und deren Stromfluss betragsmäßig und richtungsmäßig von der Poolsteuerungseinheit verändert werden kann. Die zweite Gruppe umfasst all diejenigen Elektrofahrzeuge des Gesamtenergiespeichers, die nicht Teil der ersten Gruppe sind.

Die Summe der Leistung der ersten Gruppe und der Leistung der zweiten Gruppe ergibt die Ist-Leistung des Gesamtenergiespeichers. Die Ist-Leistung wird in der Gegenwart für einen zukünftigen Zeitpunkt prognostiziert. Die Ist-Leistung, wie auch alle im Folgenden genannten Leistungen, können ein positives oder ein negatives Vorzeichen haben. Positive Leistungen entsprechen Entladeleistungen, das heißt Stromflüssen von dem Gesamtenergiespeicher in das Energieversorgungsnetz. Solange nicht alle Energiespeicher der Elektrofahrzeuge der ersten Gruppe leer sind, kann die Ist-Leistung des Gesamtenergiespeichers von der Poolsteuerungseinheit innerhalb gewisser Grenzen verändert werden.

Der ermittelte Energiebedarf wird in einen energiewirtschaftlichen Fahrplan (prognostizierte Ist-Leistung) überführt. Es wird für die Vorhaltung von Regelleistung ein optimaler Sollfüllstand innerhalb des Kapazitätsfeldes bestimmt, welches durch die verfügbare Kapazität und den minimalen Füllstand des Gesamtenergiespeichers begrenzt wird. Würde dem Gesamtenergiespeicher nun keine Energie zugeführt, würde der Füllstand des Gesamtenergiespeichers im Tagesverlauf durch abfahrende Elektrofahrzeuge und deren Energieverbrauch während der Fahrt abnehmen. Um dies zu verhindern, wird der energiewirtschaftliche Fahrplan ermittelt.

Aus dem energiewirtschaftliche Fahrplan ergibt sich ein Arbeitspunkt. Dieser Arbeitspunkt sorgt dafür, dass der Füllstand des Gesamtenergiespeichers im Tagesverlauf weiterhin auf dem Sollfüllstand gehalten wird. Der Arbeitspunkt befindet sich in dem Leistungsfeld, welches durch die maximale Ladeleistung und die maximale Entladeleistung begrenzt wird. Abhängig von der maximalen Ladeleistung und der maximalen Entladeleistung ergibt sich ein mögliches Regelband für den Arbeitspunkt.

Die maximale Ladeleistung und die maximale Entladeleistung hängen unter anderem von der Anzahl der Elektrofahrzeuge in der jeweiligen Gruppe ab und sind somit über die Zeit betrachtet nicht konstant.

Die Poolsteuerungseinheit prognostiziert für einen zukünftigen Zeitpunkt die maximal mögliche Entladeleistung des Gesamtenergiespeichers als die Summe der prognostizierten maximal möglichen Entladeleistungen der ersten Gruppe und der zweiten Gruppe.

Die von der Poolsteuerungseinheit veränderbare Ist-Leistung des Gesamtenergiespeichers kann bis zu dem Wert der maximal möglichen Entladeleistung des Gesamtenergiespeichers verändert werden. Die Differenz aus der prognostizierten Ist-Leistung des Gesamtenergiespeichers und der prognostizierten maximal möglichen Entladeleistung des Gesamtenergiespeichers kann als gesicherte Regelleistung in positiver Richtung von der Poolsteuerungseinheit für das Gesamtenergienetz für den zukünftigen Zeitpunkt vorgehalten werden.

Gemäß einer vorteilhaften Ausführungsform des erfindungsgemäßen Verfahrens sind weiter folgende Verfahrensschritte vorgesehen:
- Bestimmen, zu dem ersten Zeitpunkt, einer Gesamtkapazität der ersten Gruppe zu dem zweiten Zeitpunkt aus einer Aggregation der prognostizierten Einzelkapazitäten der Elektrofahrzeuge der ersten Gruppe zu dem zweiten Zeitpunkt.
- Bestimmen, zu dem ersten Zeitpunkt, einer reservierten Kapazität der ersten Gruppe zu dem zweiten Zeitpunkt aus einer Aggregation der reservierten Einzelkapazitäten der Elektrofahrzeuge der ersten Gruppe zu dem zweiten Zeitpunkt.
- Bestimmen, zu dem ersten Zeitpunkt, eines Füllstandes der ersten Gruppe zu dem zweiten Zeitpunkt aus einer Aggregation der prognostizierten Einzelfüllstände der Elektrofahrzeuge der ersten Gruppe zu dem zweiten Zeitpunkt.

Relevante Kapazitäten eines Kraftfahrtzeuges werden in einer vorteilhaften Ausführungsform des erfindungsgemäßen Verfahrens berücksichtigt. Die relevanten Kapazitäten sind zeitabhängig.

Der Füllstand des Gesamtenergiespeichers kann zum Beispiel tagsüber abnehmen, da die Elektrofahrzeuge in Benutzung sind, das heißt fahren. Nachts wird der Füllstand höher sein, da eine Vielzahl der Elektrofahrzeuge des Gesamtenergiespeichers nicht benutzt wird und somit zum Laden und Steuern durch die Poolsteuerungseinheit freigegeben werden können.

Durch den Mobilitätsbedarf der Nutzer und deren festgelegten Mindestreichweiten je Elektrofahrzeug gibt es einen minimalen Füllstand, das heißt eine reservierte Kapazität jedes Elektrofahrzeugs, der nicht unterschritten werden darf.

Weiter gibt es den tatsächlichen Füllstand des Gesamtenergiespeichers, dessen Kapazitätswert sich innerhalb der Kapazitätsgrenzen befindet, die von der verfügbaren Kapazität, das heißt der Gesamtkapazität, und dem minimalen Füllstand bestimmt sind.

Solange die Anzahl der Elektrofahrzeuge in der ersten Gruppe nicht gleich null ist, kann die Poolsteuerungseinheit den Füllstand des Gesamtenergiespeichers in gewissen Grenzen ändern. In der vorteilhaften Ausführungsform des erfindungsgemäßen Verfahrens werden im Folgenden nur die Kapazitäten und Füllstände der Elektrofahrzeuge der ersten Gruppe betrachtet.

Die Poolsteuerungseinheit aggregiert die prognostizierten verfügbaren Kapazitäten der Elektrofahrzeuge der ersten Gruppe für den genannten Zeitpunkt in der Zukunft und prognostiziert somit in der Gegenwart die Gesamtkapazität der ersten Gruppe zu dem genannten Zeitpunkt in der Zukunft.

Weiter werden die reservierten Einzelkapazitäten der Elektrofahrzeuge der ersten Gruppe für den genannten Zeitpunkt in der Zukunft prognostiziert. Daraus aggregiert, durch Summation, die Poolsteuerungseinheit in der Gegenwart die Werte und erhält somit eine prognostizierte reservierte Kapazität der ersten Gruppe zu dem genannten Zeitpunkt in der Zukunft.

Analog bestimmt die Poolsteuerungseinheit in der Gegenwart den Füllstand der ersten Gruppe zu dem genannten Zeitpunkt in der Zukunft, indem sie die prognostizierten Einzelfüllstände der Elektrofahrzeuge der ersten Gruppe aggregiert. Insgesamt kann in der vorteilhaften Ausführungsform somit von der Poolsteuerungseinheit in der Gegenwart der minimale Füllstand, die verfügbare Kapazität und der tatsächliche Füllstand der ersten Gruppe zu einem Zeitpunkt in der Zukunft prognostiziert werden.

Eine weitere vorteilhafte Ausführungsform des erfindungsgemäßen Verfahrens sieht in diesem Zusammenhang folgende weitere Schritte vor:
- Bestimmen, zu dem ersten Zeitpunkt, einer maximal möglichen Ladeleistung des Gesamtenergiespeichers zu dem zweiten Zeitpunkt als die Summe einer prognostizierten maximal möglichen Ladeleistung der ersten Gruppe von Elektrofahrzeugen zu dem zweiten Zeitpunkt und einer prognostizierten maximal möglichen Ladeleistung der zweiten Gruppe von Elektrofahrzeugen zu dem zweiten Zeitpunkt;
- Bestimmen, zu dem ersten Zeitpunkt, einer gesicherten Regelleistung in negativer Richtung zu dem zweiten Zeitpunkt als Differenz aus der Ist-Leistung des Gesamtenergiespeichers zu dem zweiten Zeitpunkt und der maximal möglichen Ladeleistung des Gesamtenergiespeichers zu dem zweiten Zeitpunkt.

Analog zu den Verfahrensschritten zur Bestimmen, zu dem ersten Zeitpunkt, einer gesicherten Regelleistung in positiver Richtung zu dem zweiten Zeitpunkt, wird zusätzlich zu dem ersten Zeitpunkt eine gesicherte Regelleistung in negativer Richtung zu dem zweiten Zeitpunkt bestimmt.

Als weiteren Teil des Verfahrens prognostiziert die Poolsteuerungseinheit die maximal mögliche Ladeleistung der ersten Gruppe von Elektrofahrzeugen für den genannten Zeitpunkt in der Zukunft. Weiter prognostiziert die Poolsteuerungseinheit die maximal mögliche Ladeleistung der zweiten Gruppe von Elektrofahrzeugen für den genannten Zeitpunkt in der Zukunft. Hierbei entspricht die maximal mögliche Ladeleistung der jeweiligen Gruppe der maximalen Ladeleistung der jeweiligen Gruppe und ist somit über die Zeit betrachtet nicht konstant.

Die von der Poolsteuerungseinheit veränderbare Ist-Leistung des Gesamtenergiespeichers kann bis zum dem Wert der maximal möglichen Ladeleistung des Gesamtenergiespeichers verändert werden.

Eine weitere Ausführungsform des erfindungsgemäßen Verfahrens sieht außerdem folgenden Verfahrensschritt vor:
- Vorhaltung, zu dem ersten Zeitpunkt, einer angepassten gesicherten Regelleistung in positiver Richtung für den zweiten Zeitpunkt, gegeben durch den Quotienten aus einer positiven Kapazität, bestimmt durch die Differenz aus dem Füllstand der ersten Gruppe zu dem zweiten Zeitpunkt und der reservierten Kapazität der ersten Gruppe zu dem zweiten Zeitpunkt, und der Zeit einer vorgegebenen positiven Sollzeitscheibe.

Die bestimmte und vorgehaltene gesicherte Regelleistung in positiver Richtung für einen genannten Zeitpunkt in der Zukunft kann weiter angepasst werden, in dem die verfügbaren Kapazitäten des Gesamtenergiespeichers und die verfügbaren Kapazitäten der ersten Gruppe des Gesamtenergiespeichers Berücksichtigung finden.

Bei den Elektrofahrzeuge der ersten Gruppe, die steuerbar mit dem elektrischen Energieversorgungsnetz verbunden sind, kann der tatsächliche Füllstand der steuerbaren Elektrofahrzeuge innerhalb der Grenzen, bestimmt durch einen maximalen Füllstand und einen minimalen Füllstand, in der Gegenwart verändert werden. Der minimale Füllstand ergibt sich aus der reservierten Kapazität der Elektrofahrzeuge der ersten Gruppe. Der maximale Füllstand ergibt sich aus der Gesamtkapazität der Elektrofahrzeuge der ersten Gruppe.

Die Differenz aus dem prognostizierte Füllstand der ersten Gruppe und der prognostizierten reservierten Kapazität der ersten Gruppe für den genannten Zeitpunkt in der Zukunft gibt einen Rahmen vor, innerhalb dessen Leistung in positive Richtung für einen gewissen Zeitraum erbracht werden kann.

Der Zeitraum für den die Regelleistung angeboten werden soll, wird der Poolsteuerungseinheit vorgegeben. Im Allgemeinen werden Leistungen (in MW gemessen) berechnet als Kapazitäten (in MWh gemessen) pro Zeitintervall (in h gemessen). Der Quotient aus der positiven Kapazität und dem vorgegebenen Zeitraum ist somit die Leistung, die sicher innerhalb der Kapazitätsgrenzen für den genannten Zeitpunkt in der Zukunft vorgehalten werden kann. Diese ermittelte Leistung kann als angepasste gesicherte Regelleistung in positiver Leistung für den genannten Zeitpunkt in der Zukunft für das Energieversorgungsnetz vorgehalten werden. Da es sich hierbei um vorgehaltene Regelleistungen in positiver Richtung handelt, wird der genannte und vom System geforderte Zeitraum als vorgegebene positive Sollzeitscheibe bezeichnet.

Eine weitere Ausführungsform des erfindungsgemäßen Verfahrens sieht außerdem folgenden Verfahrensschritt vor:
- Vorhaltung, zu dem ersten Zeitpunkt, einer angepassten gesicherten Regelleistung in negativer Richtung für den zweiten Zeitpunkt, gegeben durch den Quotienten aus einer negativen Kapazität, bestimmt durch die Differenz Gesamtkapazität der ersten Gruppe zu dem zweiten Zeitpunkt und aus dem Füllstand der ersten Gruppe zu dem zweiten Zeitpunkt, und der Zeit einer vorgegebenen negativen Sollzeitscheibe.

Analog zur Vorhaltung, zu dem ersten Zeitpunkt, einer angepassten gesicherten Regelleistung in positiver Richtung für den zweiten Zeitpunkt, wird zusätzlich zu dem ersten Zeitpunkt eine angepasste gesicherte Regelleistung in negativer Richtung für den zweiten Zeitpunkt vorgehalten. Die Differenz aus dem prognostizierten Füllstand der ersten Gruppe und der Gesamtkapazität der ersten Gruppe für den genannten Zeitpunkt in der Zukunft gibt einen Rahmen vor, innerhalb dessen Leistung für einen gewissen Zeitraum erbracht werden kann.

Der Zeitraum für den die Regelleistung angeboten werden soll, wird der Poolsteuerungseinheit vorgegeben. Der Quotient aus der negativen Kapazität und dem vorgegebenen Zeitraum ist somit die Leistung, die sicher innerhalb der Kapazitätsgrenzen für den genannten Zeitpunkt in der Zukunft vorgehalten werden kann. Diese ermittelte Leistung kann als angepasste gesicherte Regelleistung in negativer Richtung für den genannten Zeitpunkt in der Zukunft für das Energieversorgungsnetz vorgehalten werden. Da es sich hierbei um vorgehaltene Regelleistungen in negativer Richtung handelt, wird der genannte und vom System geforderte Zeitraum als vorgegebene negative Sollzeitscheibe bezeichnet.

In dem erfindungsgemäßen Verfahren kann beispielsweise weiter konkret vorgesehen sein, dass die zweite Gruppe von Elektrofahrzeugen eine erste, zweite und dritte Untergruppen aufweist, wobei die erste Untergruppe die Elektrofahrzeuge der zweiten Gruppe umfasst, die sich in einem selbstgesteuerten Ladevorgang befinden, wobei die zweite Untergruppe die Elektrofahrzeuge der zweiten Gruppe umfasst, die Strom beziehen, ohne den Energiespeicher zu laden, und wobei die dritte Untergruppe die Elektrofahrzeuge der zweiten Gruppe umfasst, die nicht mit dem elektrischen Energieversorgungsnetz verbunden sind.

Als kennzeichnend für die Ermittlung des Zustandes des Gesamtenergiespeichers sind verschiedene Ereignisse identifiziert worden. Grundsätzlich lässt sich der Gesamtenergiespeicher in technische Einheiten in verschiedenen Zuständen aufteilen. Dies geschieht bereits dadurch, dass der Gesamtenergiespeicher in eine erste und in eine zweite Gruppe aufgeteilt wird. Eine weitere Präzisierung der Zustände kann dadurch erreicht werden, dass die zweite Gruppe von Elektrofahrzeugen in drei Untergruppen aufgeteilt wird.

Hierbei umfasst die erste Untergruppe die Elektrofahrzeuge der zweiten Gruppe, die ihren Energiespeicher laden, sich jedoch dieser Ladungsprozess nicht steuern lässt. Das heißt, es findet zwar ein Stromfluss vom elektrischen Energieversorgungsnetz in den Gesamtenergiespeicher statt, nur ist dieser nicht durch die Poolsteuerungseinheit veränderbar. Somit kann keine Anpassung für die entsprechende Regelleistungsvorgabe stattfinden.

Die zweite Untergruppe umfasst die Elektrofahrzeuge der zweiten Gruppe, die zwar Strom beziehen, aber durch diesen Strombezug nicht ihren Energiespeicher laden. Die Elektrofahrzeuge beziehen zwar Strom, nur ist dieser Stromfluss als nicht relevant zu betrachten, da er den Füllstand der Elektrofahrzeuge nicht verändert, sondern zum Beispiel zur Klimatisierung der Elektrofahrzeuge verwendet wird.

Weiter umfasst die dritte Untergruppe die Elektrofahrzeuge der zweiten Gruppe, die abwesend sind, das heißt nicht mit einem elektrischen Energieversorgungsnetz verbunden sind. Dies kann zum Beispiel durch Benutzung durch Fahren entstehen.

In einer vorteilhaften Ausführungsform des erfindungsgemäßen Verfahrens ist weiter vorgesehen, dass jedes Elektrofahrzeug zwischen der ersten und der zweiten Gruppe wechseln kann, und/oder jedes Elektrofahrzeug zwischen dem ersten, dem zweiten und dem dritten Unterzustand wechseln kann.

Dem Nutzer eines Elektrofahrzeugs des Gesamtenergiespeichers ist es jederzeit möglich, einen Ladevorgang des Elektrofahrzeugs zu beginnen oder zu beenden. Weiter können die Nutzer der Elektrofahrzeuge der Gesamtenergiespeicher jederzeit festlegen, ob die Elektrofahrzeuge von der Poolsteuerungseinheit gesteuert werden können. Im Rahmen des erfindungsgemäßen Verfahrens bedeutet dies, dass jedes Elektrofahrzeug des Gesamtenergiespeichers jederzeit zwischen der ersten und zweiten Gruppe wechseln kann. Jederzeit kann damit auch ein Wechsel innerhalb der Untergruppen der zweiten Gruppe stattfinden.

Über ein Belohnungssystem sollen die Nutzer der Elektrofahrzeuge des Gesamtenergiespeichers motiviert werden, so oft wie möglich ein von der Poolsteuerungseinheit steuerbares Laden zu ermöglichen. Ein Ziel des erfindungsgemäßen Verfahrens ist es somit, den Anteil der Elektrofahrzeuge des Gesamtenergiespeichers in der ersten Gruppe zu erhöhen. Dies hat einerseits den Vorteil, dass insgesamt mehr Leistung gesteuert und damit zur Erbringung von Regelleistung beitragen kann. Andererseits müssen nicht alle relevanten Werte der Batterieeinheiten der Elektrofahrzeuge mit einer hohen Güte prognostiziert werden. Einzelne Prognosefehler gleichen sich gegenseitig aus, und somit können realistischere Gesamtprognosen erstellt werden.

Eine weitere vorteilhafte Ausführungsform des erfindungsgemäßen Verfahrens sieht bezüglich der Prognose vor, dass die prognostizierten Werte für die Leistung, die maximal mögliche Leistung, die minimal mögliche Leistung, die Einzelkapazitäten und die Einzelfüllständen auf historisierten Erfahrungswerten basierende statistisch ermittelte Werte sind.

Nicht das Verhalten eines jeden einzelnen Elektrofahrzeuges ist für die Prognose relevant. Das Verhalten und die Werte des Gesamtenergiespeichers werden prognostiziert. Dadurch kommen bei einer großen Fahrzeuganzahl statistische Ausgleichseffekte zum Tragen. Es werden Durchschnittswerte, welche auf historischen Erfahrungswerten basieren, für alle Elektrofahrzeuge des Gesamtenergiespeichers festgelegt. Durchschnittswerte je Elektrofahrzeug für die maximale Einzelkapazität und den Einzelfüllstand werden für Elektrofahrzeuge der ersten Gruppe des Gesamtenergiespeichers bestimmt. Weiter werden Durchschnittswerte je Elektrofahrzeuge für die aktuelle Leistung, die maximal mögliche Leistung und die minimal mögliche Leistung der Elektrofahrzeuge der ersten Gruppe und der Elektrofahrzeuge der jeweiligen Untergruppe des Gesamtenergiespeichers festgelegt.

Selbst wenn einzelne Messwerte falsch prognostiziert werden, mitteln sich durch die Poolbetrachtung etwaige Fehler gegenseitig aus. Hierin liegt der Vorteil des erfindungsgemäßen Verfahrens, nämlich der Poolbetrachtung der Elektrofahrzeuge des Gesamtenergiespeichers. Man kennt die Zusammenhänge im Umfeld des Problems recht gut und kann diese nutzen, um auf indirektem Weg zu einer Lösung zu kommen. Zudem treten durchweg keine systematischen Fehler auf, sondern heben sich Abschätzungsfehler zum Teil meist gegenseitig auf. Wurde ein Messwert beispielsweise zu groß geschätzt, wurde ein anderer eventuell als zu klein geschätzt.

Für einen initialen Zustand, das heißt in der Gegenwart, des Gesamtenergiespeichers werden die Anzahl der Elektrofahrzeuge in der ersten Gruppe sowie die Anzahl der Elektrofahrzeuge in den jeweiligen Untergruppen bestimmt. Weiter wird der Füllstand des Gesamtenergiespeichers bestimmt. Ausgehend von diesem initialen Zustand kann für jeden in der Zukunft liegenden Zeitpunkt wie folgt prognostiziert werden. Es wird prognostiziert, welcher Anteil der Elektrofahrzeuge jeweils zwischen den Gruppen beziehungsweise den Untergruppen wechselt. Auch diese Prognose basiert auf einer statischen Auswertung eines Elektrofahrzeugpools.

Eine Auswertung der regelmäßig durchgeführten Studie "Mobilität in Deutschland" zeigt, dass 30 % der privat genutzten Fahrzeuge an einem Werktag für 24 Stunden durchgehend am Wohnort der Nutzer stehen. Fahrzeuge, die nicht 24 Stunden am Wohnort des Nutzers stehen, werden zu einem Großteil für den Pendelverkehr zur Arbeit eingesetzt. Sie stehen nachts ebenfalls am Wohnort und sind für die Bereitstellung von Systemdienstleistungen verfügbar.

Aus dem jeweiligen prognostizierten Wert pro Elektrofahrzeug und der jeweiligen prognostizierten Anzahl der Elektrofahrzeuge in der jeweiligen Gruppe beziehungsweise Untergruppe ergibt sich ein prognostizierter Wert für den Gesamtenergiespeicher zu einem Zeitpunkt in der Zukunft.

Moderne Computeralgorithmen ermöglichen hier eine weitere Verbesserung durch Einbeziehung weiterer äußerer Einflussgrößen. Weiter ist es von Vorteil, in der beschriebenen Ausführungsform eine gewisse Fehlertoleranz in die bestimmte (angepasste) Regelleistung mit einzubeziehen.

Eine weitere die Prognose und die Bestimmung betreffende Ausführungsform des erfindungsgemäßen Verfahrens sieht vor, dass die Werte für die reservierten Einzelkapazitäten von Benutzern der Elektrofahrzeuge aus der ersten Gruppe zu einem Zeitpunkt vor dem ersten Zeitpunkt festgelegte Werte sind und/oder auf historisierten Erfahrungswerten basierende statistisch ermittelte Werte sind.

Die reservierten Einzelkapazitäten der Elektrofahrzeuge des Gesamtenergiespeichers und die reservierte Gesamtkapazität der Elektrofahrzeuge der ersten Gruppe können von der Poolsteuerungseinheit zu einem Zeitpunkt in der Gegenwart für einen in der Zukunft liegenden Zeitpunkt auf verschiedene Arten bestimmt werden.

Einerseits können die reservierten Einzelkapazitäten, analog zu den Einzelkapazitäten und den Einzelfüllständen, auf historisierten Erfahrungswerten basierende statistisch ermittelte Werte sein und wie beschrieben prognostiziert werden.

Anderseits können auch exakte Werte vorliegen. Dies ist dann der Fall, wenn die Nutzer des jeweiligen Elektrofahrzeuge zu einem in der Vergangenheit liegenden Zeitpunkt für einen in der Zukunft liegenden Zeitpunkt über ein Reservemittel eine Einzelkapazität reservieren und diesen Wert über die Datenverbindung an die Poolsteuerungseinheit mitteilen. Die genannte Datenverbindung kann drahtgebunden und/oder drahtlos sein. Die genannten Reservierungsmittel können fahrzeugfest und/oder fahrzeugungebunden sein. In einer vorteilhaften Ausführungsform handelt es sich bei dem Reservemittel um ein tragbares und somit zu jederzeit von den Nutzern der Elektrofahrzeuge nutzbares Gerät. Somit ergibt sich die Möglichkeit, dass die Nutzer der Elektrofahrzeuge jederzeit und fahrzeugungebunden Kapazitäten für in der Zukunft liegende Zeitpunkte reservieren können.

Liegen gleichzeitig sowohl vom Nutzer des Elektrofahrzeugs festgelegte Werte und von der Poolsteuerungseinheit prognostizierte Werte für einen Zeitpunkt in der Zukunft vor, wird in einer vorteilhaften Ausführungsform des erfindungsgemäßen Verfahren stets der vom Nutzer des Elektrofahrzeugs festgelegte Wert verwendet. Das Anbieten von Regelleistungen ist immer eine zusätzliche Anwendung der Poolbatterie. Unabhängig davon, wird immer eine Versorgung des Elektrofahrzeugpools mit der notwendigen Energie für die gewünschte Mobilität der Nutzer garantiert sein.

Eine weitere Ausführungsform des erfindungsgemäßen Verfahrens sieht vor, dass dem Gesamtenergiespeicher zusätzlich eine Mehrzahl von steuerbar an das elektrische Energieversorgungsnetz koppelbare elektrische Einheiten, die keine Elektrofahrzeuge sind, hinzugefügt werden, und dass die elektrischen Einheiten wie die Elektrofahrzeuge der ersten Gruppe behandelt werden.

Bei den elektrischen Einheiten kann es sich um Verbraucher, wie eine Industrieanlage, um Erzeuger wie eine Kraft-Wärme-Kopplungsanlage sowie um stationäre Energiespeicher wie Batteriespeicher handeln. Die elektrischen Einheiten werden wie die Elektrofahrzeuge der ersten Gruppe des Gesamtenergiespeichers verwaltet. Ein steuerbarer Stromfluss kann zwischen dem elektrischen Energieversorgungsnetz und den elektrischen Einheiten stattfinden.

Das erfindungsgemäße System zum Erbringen einer Regelleistung für ein elektrisches Energieversorgungsnetz mit einer Mehrzahl von Energieerzeugern, einer Mehrzahl von Energieabnehmern und einer Poolsteuerungseinheit weist die für die Durchführung des erfindungsgemäßen Verfahrens notwendigen Mittel und Einrichtungen auf.

Eine weitere Aufgabe besteht darin, gesteuerte Leistungsaufnahmen und Leistungsabgaben eines Energiespeichers dem Netzbetreiber aktuell bereitzustellen.

Hinsichtlich des Verfahrens wird die Aufgabe gelöst durch ein Verfahren zum Erbringen einer Regelleistung für ein elektrisches Energieversorgungsnetz mit einer Mehrzahl von Energieerzeugern, einer Mehrzahl von Energieabnehmern und einer Poolsteuerungseinheit, gekennzeichnet durch:
- Bereitstellen eines Gesamtenergiespeichers, das aus einer Mehrzahl von bidirektional an das elektrische Energieversorgungsnetz koppelbaren Elektrofahrzeugen mit jeweils mindestens einem Energiespeicher besteht.
- Bestimmen einer Ist-Leistung des Gesamtenergiespeichers als die Summe einer Leistung einer ersten Gruppe von Elektrofahrzeugen und einer Leistung einer zweiten Gruppe von Elektrofahrzeugen, wobei die erste Gruppe diejenigen Elektrofahrzeuge umfasst, deren Energiespeicher zum jeweiligen Zeitpunkt steuerbar an das elektrische Energieversorgungsnetz gekoppelt sind, um einen Stromfluss zwischen den entsprechenden Energiespeichern und dem elektrischen Energieversorgungsnetz zu ermöglichen und wobei die zweite Gruppe diejenigen Elektrofahrzeuge umfasst, die nicht in der ersten Gruppe sind.
- Bestimmen einer maximal möglichen Entladeleistung des Gesamtenergiespeichers als die Summe einer maximal möglichen Entladeleistung der ersten Gruppe von Elektrofahrzeugen und einer maximal möglichen Entladeleistung der zweiten Gruppe von Elektrofahrzeugen.
- Bereitstellen einer Regelleistung in positiver Richtung, deren Wert der Differenz aus der Ist-Leistung des Gesamtenergiespeichers und der maximal möglichen Entladeleistung des Gesamtenergiespeichers entspricht.

Es liegt zu Grunde, dass nur schwer Stromreserven angelegt werden können. Das sich ständig ändernde Nutzerverhalten erfordert jedoch, Stromflüsse beliebiger Richtung schnell den Gegebenheiten anpassen zu können. Dem liegt folglich die Motivation zu Grunde, bestehende elektrische Energieversorgungsnetze für gegenwärtige Zeitpunkte besser zu stabilisieren.

Analog zu dem erfindungsgemäßen Verfahren zum Erbringen einer Regelleistung für ein elektrisches Energieversorgungsnetz durch das Bestimmen von prognostizierten relevanten Werten für einen zukünftigen Zeitpunkt, erfolgt ein weiteres Verfahren zum Erbringen einer Regelleistung für ein elektrisches Energieversorgungsnetz durch das Bestimmen und das Bereitstellen von relevanten Werten für einen gegenwärtigen Zeitpunkt. Ein Unterschied der beiden Verfahren ist dadurch gegeben, dass Werte für Leistung und Kapazität nicht mittels der Prognosemittel für zukünftige Zeitpunkte prognostizierte Werte sind. Diese Werte werden mittels der Bestimmungsmittel für gegenwärtige Zeitpunkte bestimmt. Weiter wird ein vorgegebener Zeitraum als Istzeitscheibe anstatt als Sollzeitscheibe bezeichnet.

Gemäß einer vorteilhaften Ausführungsform des erfindungsgemäßen Verfahrens ist weiter folgender Verfahrensschritt vorgesehen:
das Bereitstellen der jeweiligen Regelleistung entsteht durch die Steuerung eines Stromflusses der ersten Gruppe von Elektrofahrzeugen durch eine Poolsteuerungseinheit, die dabei eine angeforderte Sollleistung auf die Elektrofahrzeuge der ersten Gruppe aufteilt.

Die Poolsteuerungseinheit verfügt über Steuermittel zum Steuern des Stromflusses zwischen dem elektrischen Energieversorgungsnetz und der ersten Gruppe des Gesamtenergiespeichers. Mittels der Steuermittel kann die Poolsteuerungseinheit den Betrag und die Richtung des Stromflusses ändern. Die Änderung kann innerhalb des Kapazitätsfensters der positiven Kapazität oder der negativen Kapazität für den Zeitraum der positiven Istzeitscheibe oder der negativen Istzeitscheibe erfolgen. Dieser gesteuerte Stromfluss wird von der Poolsteuerungseinheit an Netzbetreiber weitergegeben. Dadurch wird die angepasste Regelleistung in die jeweilige Richtung bereitgestellt.

Eine weitere vorteilhafte Ausführungsform des Verfahrens sieht vor, dass das Steuern des Stromflusses ein Übermitteln eines Steuersignals von der Poolsteuerungseinheit an die Elektrofahrzeuge der ersten Gruppe umfasst.

Das System zum Erbringen einer Regelleistung für ein elektrisches Energieversorgungsnetz mit einer Mehrzahl von Energieerzeugern, einer Mehrzahl von Energieabnehmern und einer Poolsteuerungseinheit weist die für die Durchführung des zugehörigen Verfahrens notwendigen Mittel und Einrichtungen auf.

Die Erfindung wird definiert durch den Gegenstand der unabhängigen Ansprüche. Die folgenden Beispiele, die nicht alle Merkmale der unabhängigen Ansprüche aufweisen, dienen der Erläuterung der Erfindung und nicht der Definition des Schutzbereichs.

### Figurenbeschreibung

Nachfolgend werden bevorzugte Ausführungsformen der Erfindung anhand der beiliegenden Figuren erläutert. Es zeigen
- Fig. 1: eine schematische Ansicht eines elektrischen Energieversorgungsnetzes, welches mit einem Gesamtenergiespeicher verbunden ist,
- Fig. 2: eine schematische Ansicht einer virtuellen Poolbatterie, welche unter anderem eine Poolsteuerungseinheit und den Gesamtenergiespeicher umfasst,
- Fig. 3: ein Ablaufdiagramm des Verfahrens für die Prognose der Ist-Leistung,
- Fig. 4: ein Ablaufdiagramm des Verfahrens zur Vorhaltung einer angepassten gesicherten Regelleistung in positiver Richtung,
- Fig. 5: ein Ablaufdiagramm des Verfahrens zur Vorhaltung einer angepassten gesicherten Regelleistung in negativer Richtung,
- Fig. 6: ein Ablaufdiagramm des Verfahrens zur Erbringung einer angepassten Regelleistung in positiver Richtung,
- Fig. 7: ein Ablaufdiagramm des Verfahrens zur Erbringung einer angepassten Regelleistung in negativer Richtung,
- Fig. 8: ein Ablaufdiagramm des Verfahrens zur Vorhaltung einer angepassten gesicherten Regelleistung in beliebiger Richtung,

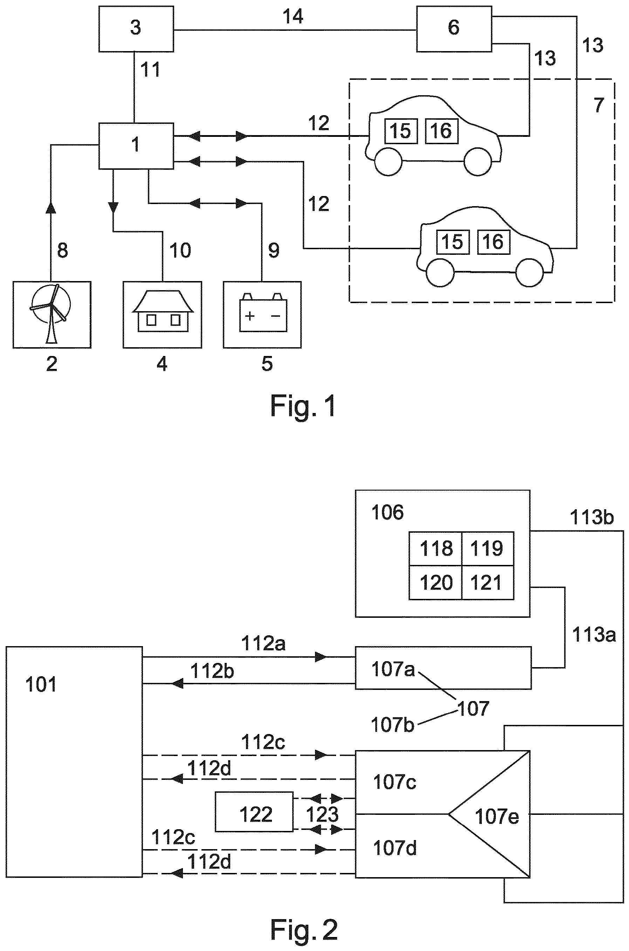

Fig. 1 zeigt ein elektrisches Energieversorgungsnetz 1 mit einem Gesamtenergiespeicher 7. Das elektrische Energieversorgungsnetz 1 ist über Leitungskomponenten für Stromflüsse 12 mit dem Gesamtenergiespeicher 7 verbunden. Weiter ist das elektrische Energieversorgungsnetz 1 über Leitungskomponenten für Stromflüsse 8-10 verbunden mit folgenden Komponenten: einem Energieerzeuger 2, einem Energieabnehmer 4 und einem Energiespeicher 5. Es ist möglich, weitere Komponenten mit dem elektrischen Energieversorgungsnetz 1 zu verbinden. Das elektrische Energieversorgungsnetz 1 ist über eine erste Datenverbindung 11 mit einem Netzbetreiber 3 verbunden.

Die Leitungskomponenten beinhalten weitere, hier nicht dargestellte Komponenten, wie beispielsweise Schaltstationen, Transformatoren oder ähnliches. Die dargestellten Pfeile in den Stromflüssen 8, 9, 10 und 12 symbolisieren die Stromflussrichtung in den Leitungskomponenten. Der Betrag eines Stromflusses kann variiert werden. Der Betrag eines Stromflusses ist in Fig. 1 nicht dargestellt.

Das Ausführungsbeispiel der Fig. 1 zeigt eine Windkraftanlage als Energieerzeuger 2, eine Privatwohnung ohne Energieerzeugung als Energieabnehmer 4 und eine Batterie als Energiespeicher 5. Die vorteilhafte Ausführung der Erfindung besteht darin, dass der Gesamtenergiespeicher 7 eine Vielzahl von Elektrofahrzeugen als Gesamtenergiespeicher 7 umfasst.

Die Elektrofahrzeuge sind jeweils mit mindestens einem Energiespeicher 5 ausgestattet. Als Elektrofahrzeuge werden im Folgenden Kraftfahrzeuge bezeichnet, die mit einem mit Strom aus dem elektrischen Energieversorgungsnetz ladbaren Energiespeicher 5 ausgestattet sind, welcher einen Elektromotor antreibt. Als Elektrofahrzeuge werden weiter im Folgenden Kraftfahrzeuge bezeichnet, die mit einem mit Strom aus dem elektrischen Energieversorgungsnetz ladbaren Energiespeicher 5 ausgestattet sind, welcher einen Elektromotor antreibt und die zusätzlich zum Energiespeicher 5 mit einem Verbrennungsmotor ausgestattet sind.

Der Netzbetreiber 3 ist eine Einrichtung zur Verwaltung und Überwachung der Infrastruktur des elektrischen Energieversorgungsnetzes 1. Er hält die Systemverantwortung für das elektrische Energieversorgungsnetz 1.

Die Poolsteuerungseinheit 6 kann den Stromfluss 12 für jedes Elektrofahrzeug jeweils in der Höhe und in der Richtung ändern.

Der Netzbetreiber 3 kann über die erste Datenverbindung 11 initiieren, dass die Stromflüsse 8 und 9 in der Höhe geändert werden. Der Netzbetreiber 3 kann über die erste Datenverbindung 11 initiieren, dass der Stromfluss 9 in der Richtung geändert wird.

Der Energieabnehmer 4 kann den Stromfluss 10 in der Höhe ändern.

Der Netzbetreiber kommuniziert über eine zweite Datenverbindung 14 mit der Poolsteuerungseinheit 6. Über die Datenverbindung 14 werden Werte über die Höhe und die Richtung der Stromflüsse 12 kommuniziert. Weiter werden unter anderem über die Datenverbindung 14 Werte über die Höhe und die Richtung von Regelleistungen kommuniziert.

Die Poolsteuerungseinheit 6 kommuniziert über eine dritte Datenverbindung 13 mit dem Gesamtenergiespeicher 7. Über die Datenverbindung 13 werden Werte über die Höhe und die Richtung der Stromflüsse 12 kommuniziert. Weiter werden unter anderem über die Datenverbindung 13 Werte über die Höhe und die Richtung von Regelleistungen kommuniziert und Messwerte des Gesamtenergiespeichers 7 übertragen. Der Gesamtenergiespeicher verfügt über verschiedene Messgeräte 15 zum Messen der Leistung, der Kapazität und des Füllstandes. Die Messgeräte können im Elektrofahrzeug untergebracht sein.

Die Datenverbindungen 11, 13 und 14 können drahtgebundene und/oder drahtlose Datenverbindungen sein.

Der Gesamtenergiespeicher verfügt über Eingabegeräte 16 zum Festlegen einer reservierten Kapazität. Diese Werte werden über die Datenverbindung 13 gesendet. Die Poolsteuerungseinheit 6 hat die Aufgabe, zu garantieren, dass der Wert der reservierten Kapazität zu keiner Zeit durch Entladung unterschritten wird. Die Eingabegeräte 16 können fest am Elektrofahrzeug angebracht sein. Weiter kann es sich bei den Eingabegeräten 16 um tragbare Geräte handeln, die der Nutzer des Elektrofahrzeugs mit sich führen kann. So ist garantiert, dass eine Eingabe in das Eingabegerät 16 jederzeit und unabhängig vom Standort des Elektrofahrzeugs getätigt werden kann.

Fig. 2 zeigt eine schematische Ansicht einer virtuellen Poolbatterie, welche das elektrische Energieversorgungsnetz 1, die Poolsteuerungseinheit 6 und den Gesamtenergiespeicher 7 umfasst. Die Poolsteuerungseinheit 106 entspricht der Poolsteuerungseinheit 6 aus Fig. 1. Der Gesamtenergiespeicher 107 entspricht dem Gesamtenergiespeicher 7 aus Fig. 1. Der Gesamtenergiespeicher 107 umfasst eine erste Gruppe 107a und eine zweite Gruppe 107b. Die erste Gruppe 107a umfasst die Elektrofahrzeuge des Gesamtenergiespeichers 107, die steuerbar an das elektrische Energieversorgungsnetz 101 gekoppelt sind. Die zweite Gruppe 107b umfasst die Elektrofahrzeuge des Gesamtenergiespeichers 107, die nicht in der ersten Gruppe enthalten sind. Das elektrische Energieversorgungsnetz 101 entspricht dem elektrischen Energieversorgungsnetz 1 aus Fig. 1.

Die Leitungskomponenten und das elektrische Energieversorgungsnetz beinhalten weitere, hier nicht dargestellte Komponenten, wie beispielsweise Schaltstationen, Transformatoren oder ähnliches. Die dargestellten Pfeile in den Stromflüssen 112a - 112d und 123 symbolisieren die Stromflussrichtung in den Leitungskomponenten. Der Betrag eines Stromflusses kann variiert werden. Der Betrag eines Stromflusses ist in Fig. 2 nicht dargestellt.

Gemäß der Unterteilung des Gesamtenergiespeichers 107 in die erste Gruppe 107a und die zweite Gruppe 107b, besteht eine ersten Datenverbindungsgruppe 113a und eine zweite Datenverbindungsgruppe 113b. Zusammengenommen entsprechen die erste Datenverbindungsgruppe 113a und die zweite Datenverbindungsgruppe 113b der dritten Datenverbindung 13 in Fig. 1. Die erste Datenverbindungsgruppe 113a und die zweite Datenverbindungsgruppe 113b sind in ihrer Ausgestaltungsform und ihrer Funktion identisch. Die erste Datenverbindungsgruppe 113a und die zweite Datenverbindungsgruppe 113b unterscheiden sich anhand ihres Anknüpfungspunktes an die erste Gruppe 107a beziehungsweise an die zweite Gruppe 107b.

Gemäß der Unterteilung des Gesamtenergiespeichers 107 in die erste Gruppe 107a und die zweite Gruppe 107b besteht ein steuerbarer Stromfluss 112a in negativer Richtung, ein steuerbarer Stromfluss 112b in positiver Richtung, ein nicht-steuerbarer Stromfluss 112c in negativer Richtung und ein nicht-steuerbaren Stromfluss 112d in positiver Richtung. Stromfluss in positiver Richtung bedeutet Entladen des Gesamtenergiespeichers 107, das heißt der Strom fließt von dem Gesamtenergiespeicher 107 in das elektrische Energieversorgungsnetz 101. Stromfluss in negativer Richtung bedeutet Laden des Gesamtenergiespeichers 107, das heißt der Strom fließt vom elektrische Energieversorgungsnetz in den Gesamtenergiespeicher 107. Zusammengenommen entsprechen die Stromflüsse 112a - 112d dem Stromfluss 12 in Fig. 1. Die steuerbaren Stromflüsse 112a, 112b und die nicht-steuerbaren Stromflüsse 112c, 112d sind in ihrer Ausgestaltungsform in der hier beschriebenen Ausführungsform identisch. Die steuerbaren Stromflüsse 112a, 112b und die nicht-steuerbaren Stromflüsse 112c, 112d unterscheiden sich anhand ihres Anknüpfungspunktes an die erste Gruppe 107a beziehungsweise an die zweite Gruppe 107b.

Die zweite Gruppe 107b besteht aus Untergruppen 107c - 107e. Die erste Untergruppe 107c umfasst die Elektrofahrzeuge, die sich in einem selbstgesteuerten Ladevorgang befinden. Die zweite Untergruppe 107d umfasst die Elektrofahrzeuge, die Strom beziehen ohne ihren Energiespeicher zu laden. Die dritte Untergruppe 107e umfasst die Elektrofahrzeuge, die nicht mit dem elektrischen Energieversorgungsnetz verbunden sind.

Zu jeder Zeit kann ein Wechsel der Elektrofahrzeuge zwischen der ersten Gruppe 107a zu der zweiten Gruppe 107b stattfinden. Zu jeder Zeit kann ein Wechsel der Elektrofahrzeuge zwischen den Untergruppen 107c-107e stattfinden.

Die Datenverbindungsgruppe 113b verbindet die Poolsteuerungseinheit 106 mit jeder Untergruppe 107c - 107e. Die Stromflüsse 112c, 112d finden zwischen dem elektrischen Energieversorgungsnetz 101 und den Untergruppe 107c, 107d statt.

Die Poolsteuerungseinheit 106 verfügt über ein Bestimmungsmittel 118 zum Feststellen und Anzeigen von relevanten Werten. Hierbei werden die Werte aus den Datenverbindungen 113a, 113b bestimmt. Weiter werden über die Datenverbindungen 113a, 113b die Anzahl der Elektrofahrzeuge in den Gruppen 107a und 107b und die Anzahl der Elektrofahrzeuge in den Untergruppen 107c - 107e zu einem jeweiligen Zeitpunkt übertragen und mit den Bestimmungsmitteln 118 bestimmt.

Die Poolsteuerungseinheit 106 verfügt über ein Steuerungsmittel 119 zum Steuern von relevanten Größen, wie der Höhe des steuerbaren Stromflusses 112a, 112b.

Die Poolsteuerungseinheit 106 verfügt über ein Prognosemittel 120 zum Prognostizieren von relevanten Größen, wie der Leistung, der Einzelkapazitäten und der Einzelfüllstände eines Elektrofahrzeugs für einen zukünftigen Zeitpunkt. Weiter werden mit Hilfe der Prognosemittel 120 die Anzahl der Elektrofahrzeuge in den Gruppen 107a und 107b und die Anzahl der Elektrofahrzeuge in den Untergruppen 107c - 107e prognostiziert. Weiter werden mit Hilfe der Prognosemittel 120 die maximal mögliche Ladeleistung und die maximal mögliche Entladeleistung des Gesamtenergiespeichers 107 prognostiziert. Die Prognosemittel umfassen nötige und hier nicht dargestellte analytischen Berechnungs- und/oder Speichermittel, um auf historisierten Erfahrungswerten basierende statistisch ermittelte Werte zu bestimmen.

Die Poolsteuerungseinheit 106 verfügt über eine Kommunikationsschnittstelle 121. Die Kommunikationsschnittstelle 121 empfängt von dem Netzbetreiber 3 Werte für Regelleistungen. Das kann die Vorgabe des Sollwertes für Regelleistung sein. Weiter können über die Kommunikationsschnittstelle 121 Werte für Istleistungen an den Netzbetreiber übermittelt werden. Die Zeit der positiven und/oder negativen Sollzeitscheibe und die Zeit der positiven und/oder negativen Istzeitscheibe können der Poolsteuerungseinheit 106 vorgegeben werden.

Die Zeit der positiven Sollzeitscheibe gibt an, über welchen Zeitraum zu einem vorgegebenen Zeitpunkt in der Zukunft ein Stromfluss 112b in positiver Richtung stattfinden können soll. Die Zeit der negativen Sollzeitscheibe gibt an, über welchen Zeitraum zu einem vorgegebenen Zeitpunkt in der Zukunft ein Stromfluss 112a in negativer Richtung stattfinden können soll. Die Zeit der positiven Istzeitscheibe gibt an, über welchen Zeitraum in der Gegenwart ein Stromfluss 112a in positive Richtung stattfinden können soll. Die Zeit der negativen Istzeitscheibe gibt an, über welchen Zeitraum in der Gegenwart ein Stromfluss 112a in negative Richtung stattfinden können soll.

Weiter können die Elektrofahrzeuge der Untergruppen 107c, 107d durch eine nicht-steuerbare hier nicht näher beschriebene externe Energiequelle 122 über einen Stromfluss 123 geladen und/oder entladen werden.

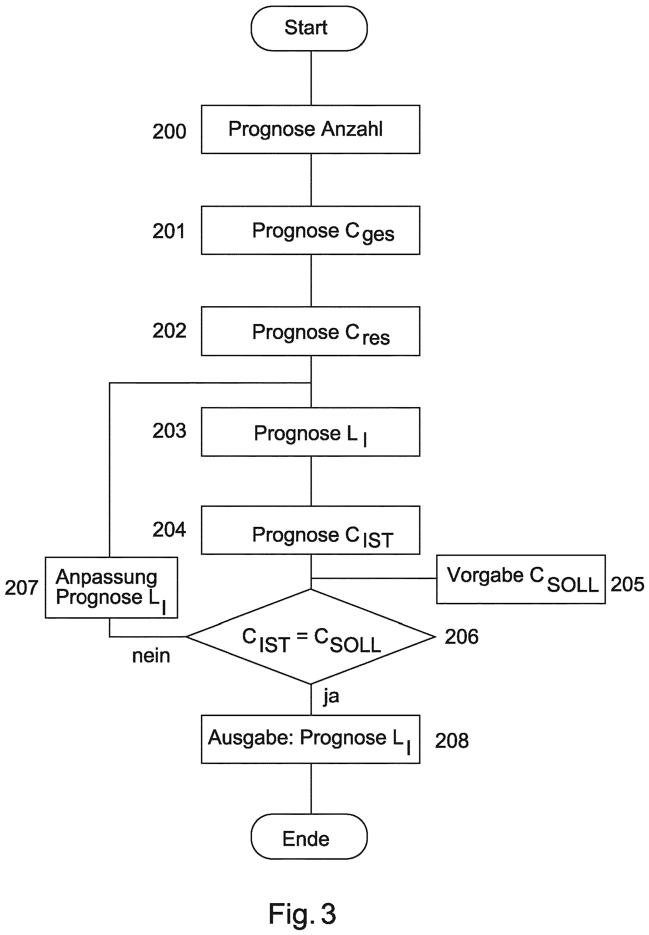

In Fig. 3 ist das Prognostizieren der Ist-Leistung für einen Zeitpunkt in der Zukunft durch die Poolsteuerungseinheit 6 erläutert. Die Ist-Leistung gibt diejenige Leistung an, die zu dem jeweiligen Zeitpunkt von dem Gesamtenergiespeicher 7 in das Energieversorgungsnetz 1 eingespeist oder durch den Gesamtenergiespeicher 7 von dem Energieversorgungsnetz 1 bezogen wird. Das Einspeisen in das Energieversorgungsnetz 1 wird als positive Leistung bezeichnet, das heißt der Gesamtenergiespeicher 7 wird entladen. Das Beziehen vom Energieversorgungsnetz 1 wird als negative Leistung bezeichnet, das heißt der Gesamtenergiespeicher 7 wird geladen.

Im Folgenden werden Leistungen in Megawatt (MW), Kapazitäten in Megawattstunden (MWh) und Zeiten in Stunden (h) gemessen.

In Verfahrensschritt 200 prognostiziert die Poolsteuerungseinheit 106 mit Hilfe der Prognosemittel 120 die Anzahl der Elektrofahrzeuge in der ersten Gruppe 107a und die jeweilige Anzahl der Elektrofahrzeuge in den Untergruppen 107c - 107e für einen Zeitpunkt in der Zukunft.

In Verfahrensschritt 201 wird anhand der prognostizierten Einzelkapazität eines Elektrofahrzeugs der ersten Gruppe 107a und der prognostizierten Anzahl der Elektrofahrzeuge der ersten Gruppe 107a die Gesamtkapazität der ersten Gruppe 107a für einen Zeitpunkt in der Zukunft bestimmt.

Anhand der reservierten Einzelkapazität eines Elektrofahrzeugs der ersten Gruppe 107a und der prognostizierten Anzahl der Elektrofahrzeuge der ersten Gruppe 107a wird in Verfahrensschritt 202 die reservierte Kapazität der ersten Gruppe 107a für einen Zeitpunkt in der Zukunft bestimmt.

Weiter kann die reservierte Einzelkapazität eines Elektrofahrzeugs der ersten Gruppe 107a exakt bestimmt sein. Dies ist der Fall, wenn der Nutzer des Elektrofahrzeugs zu einem in der Vergangenheit liegenden Zeitpunkt den Wert der reservierten Einzelkapazität des Elektrofahrzeugs für den bestimmten Zeitpunkt in der Zukunft mit dem Reservemittel 16 bestimmt hat. Exakt bestimmte Werte haben immer Priorität gegenüber prognostizierten Werten, um eine größtmögliche Kundenzufriedenheit zu erreichen.

In Verfahrensschritt 203 wird anhand der prognostizierten Anzahl der Elektrofahrzeuge in der ersten Gruppe 107a und der zweiten Gruppe 107b die Ist-Leistung des Gesamtenergiespeichers prognostiziert. Die Summe der prognostizierten Leistung der ersten Gruppe 107a und der prognostizierten Leistung der zweiten Gruppe 107b ergibt die Ist-Leistung des Gesamtenergiespeichers 7 für einen zukünftigen Zeitpunkt.

Anhand dieser prognostizierten Ist-Leistung wird der Ist-Füllstand in Verfahrensschritt 204 für einen zukünftigen Zeitpunkt bestimmt.

In Verfahrensschritt 205 wird ein Soll-Füllstand der ersten Gruppe 107a für einen zukünftigen Zeitpunkt bestimmt.

In Verfahrensschritt 206 wird der Ist-Füllstand des Gesamtenergiespeichers aus Verfahrensschritt 204 mit dem Soll-Füllstand aus Verfahrensschritt 205 verglichen. Wird eine Ungleichheit festgestellt, muss die Ist-Leistung des Gesamtenergiespeichers 7 für einen zukünftigen Zeitpunkt angepasst werden. Dies geschieht in Verfahrensschritt 207. Wird eine Gleichheit von Ist-Füllstand des Gesamtenergiespeichers aus Verfahrensschritt 204 und dem Soll-Füllstand aus Verfahrensschritt 205 festgestellt, wird mit Verfahrensschritt 208 fortgefahren.

In Verfahrensschritt 208 wird die Ist-Leistung des Gesamtenergiespeichers 7 für einen zukünftigen Zeitpunkt ausgegeben.

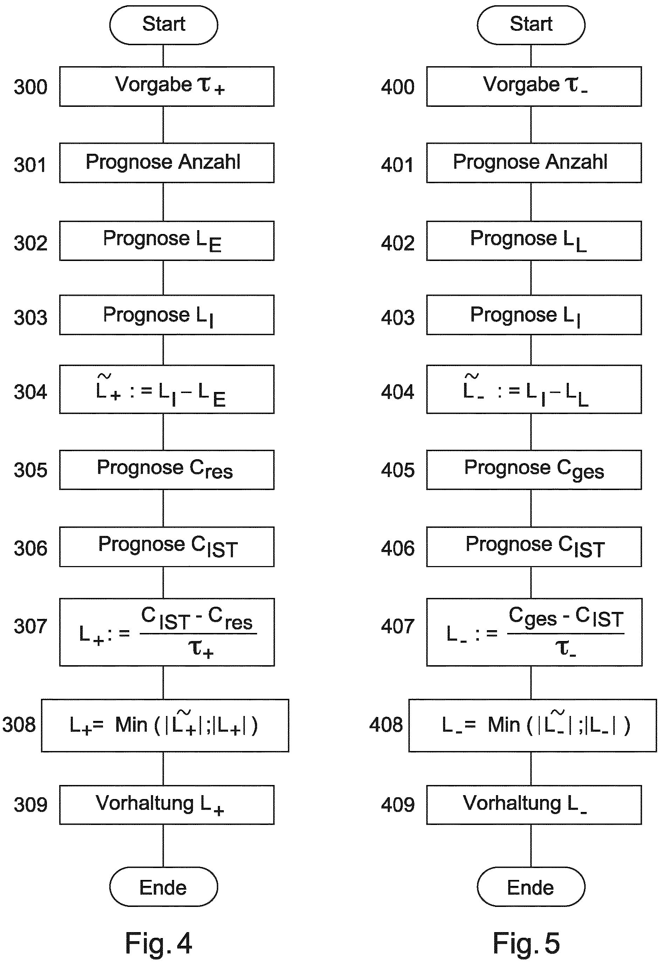

In Fig. 4 ist das Prognostizieren und Vorhalten einer angepassten gesicherten Regelleistung in positiver Richtung durch die Poolsteuerungseinheit 6 erläutert. Diese angepasste gesicherte Regelleistung in positiver Richtung wird für einen zukünftigen Zeitpunkt vorgehalten.

Im Folgenden werden Leistungen in Megawatt (MW), Kapazitäten in Megawattstunden (MWh) und Zeiten in Stunden (h) gemessen.

In Verfahrensschritt 300 wird eine positive Sollzeitscheibe vorgegeben. Die Zeit der positiven Sollzeitscheibe gibt eine zeitliche Vorgabe an, wie lange eine Regelleistung in positiver Richtung angeboten werden können soll.

In Verfahrensschritt 301 prognostiziert die Poolsteuerungseinheit 106 mit Hilfe der Prognosemittel 120 die Anzahl der Elektrofahrzeuge in der ersten Gruppe 107a und die jeweilige Anzahl der Elektrofahrzeuge in den Untergruppen 107c - 107e für einen Zeitpunkt in der Zukunft.

In Verfahrensschritt 302 prognostiziert die Poolsteuerungseinheit 106 mit Hilfe der Prognosemittel 120 die maximal mögliche Entladeleistung des Gesamtenergiespeichers 7 für einen Zeitpunkt in der Zukunft. Die maximal mögliche Entladeleistung des Gesamtenergiespeichers 7 für einen Zeitpunkt in der Zukunft ist die Summe der prognostizierten maximal möglichen Entladeleistung der ersten Gruppe 107a und der prognostizierten maximal möglichen Entladeleistung der zweiten Gruppe 107b für einen Zeitpunkt in der Zukunft. Die maximal mögliche Entladeleistung gibt diejenige Leistung an, die maximal zu dem jeweiligen Zeitpunkt von dem Gesamtenergiespeicher 7, der ersten Gruppe 107a oder der zweiten Gruppe 107b in das Energieversorgungsnetz 1 eingespeist werden könnte.

In Verfahrensschritt 303 wird die Ist-Leistung gemäß des in Fig. 3 beschriebenen Verfahrens für einen Zeitpunkt in der Zukunft prognostiziert.

Verfahrensschritt 304 bestimmt die Differenz aus dem Wert aus Verfahrensschritt 303 für die prognostizierte Ist-Leistung des Gesamtenergiespeichers 7 und dem Wert aus Verfahrensschritt 302 für die prognostizierte maximal mögliche Entladeleistung des Gesamtenergiespeichers 7. Dies ergibt die gesicherte Regelleistung in positiver Richtung, die vorgehalten werden kann.

Anhand der prognostizierten reservierten Einzelkapazität eines Elektrofahrzeugs der ersten Gruppe 107a und der prognostizierten Anzahl der Elektrofahrzeuge der ersten Gruppe 107a wird in Verfahrensschritt 305 die prognostizierte reservierte Kapazität der ersten Gruppe 107a für einen Zeitpunkt in der Zukunft bestimmt.

Weiter kann die prognostizierte reservierte Einzelkapazität eines Elektrofahrzeugs der ersten Gruppe 107a exakt bestimmt sein. Dies ist der Fall, wenn der Nutzer des Elektrofahrzeugs zu einem in der Vergangenheit liegenden Zeitpunkt den Wert der reservierten Einzelkapazität des Elektrofahrzeugs für den bestimmten Zeitpunkt in der Zukunft mit dem Reservemittel 16 bestimmt hat. Exakt bestimmte Werte haben immer Priorität gegenüber prognostizierten Werten, um eine größtmögliche Kundenzufrieden zu erreichen.

In Verfahrensschritt 306 wird anhand des prognostizierten Einzelfüllstandes eines Elektrofahrzeugs der ersten Gruppe 107a und der prognostizierten Anzahl der Elektrofahrzeuge der ersten Gruppe 107a der prognostizierte Füllstand der ersten Gruppe 107a für einen Zeitpunkt in der Zukunft bestimmt.

Die angepasste gesicherte Regelleistung in positiver Richtung wird in Verfahrensschritt 307 dadurch bestimmt, dass das Produkt aus dem Wert der angepassten gesicherten Regelleistung in positiver Richtung und dem Wert der positiven Sollzeitscheibe identisch ist mit der Differenz aus der prognostizierten reservierten Kapazität der ersten Gruppe 107a und dem prognostizierten Füllstand der ersten Gruppe 107a für einen Zeitpunkt in der Zukunft.

Die Werte der gesicherten Regelleistung in positiver Richtung aus Verfahrensschritt 304 und der angepassten gesicherten Regelleistung in positiver Richtung aus Verfahrensschritt 307 werden im Betrag in Verfahrensschritt 308 verglichen. Das Minimum der beiden Beträge kann in Verfahrensschritt 309 als angepasste gesicherte Regelleistung in positiver Richtung vorgehalten werden.

In Fig. 5 ist das Prognostizieren und Vorhalten einer angepassten gesicherten Regelleistung in negativer Richtung durch die Poolsteuerungseinheit 6 erläutert. Diese angepasste gesicherte Regelleistung in negativer Richtung wird für einen zukünftigen Zeitpunkt vorgehalten.

Im Folgenden werden Leistungen in Megawatt (MW), Kapazitäten in Megawattstunden (MWh) und Zeiten in Stunden (h) gemessen.

In Verfahrensschritt 400 wird eine negative Sollzeitscheibe vorgegeben. Die Zeit der negativen Sollzeitscheibe gibt eine zeitliche Vorgabe an, wie lange eine Regelleistung in negativer Richtung angeboten werden können soll.

In Verfahrensschritt 401 prognostiziert die Poolsteuerungseinheit 106 mit Hilfe der Prognosemittel 120 die Anzahl der Elektrofahrzeuge in der ersten Gruppe 107a und die jeweilige Anzahl der Elektrofahrzeuge in den Untergruppen 107c - 107e für einen Zeitpunkt in der Zukunft.

In Verfahrensschritt 402 prognostiziert die Poolsteuerungseinheit 106 mit Hilfe der Prognosemittel 120 die maximal mögliche Ladeleistung des Gesamtenergiespeichers 7 für einen Zeitpunkt in der Zukunft. Die maximal mögliche Ladeleistung des Gesamtenergiespeichers 7 für einen Zeitpunkt in der Zukunft ist die Summe der prognostizierten maximal möglichen Entladeleistung der ersten Gruppe 107a und der prognostizierten maximal möglichen Entladeleistung der zweiten Gruppe 107b für einen Zeitpunkt in der Zukunft. Die maximal mögliche Entladeleistung gibt diejenige Leistung an, die maximal zu dem jeweiligen Zeitpunkt durch den Gesamtenergiespeicher 7, der ersten Gruppe 107a oder der zweiten Gruppe 107b von dem Energieversorgungsnetz 1 bezogen werden könnte.

In Verfahrensschritt 403 wird die Ist-Leistung gemäß des in Fig. 3 beschriebenen Verfahrens für einen Zeitpunkt in der Zukunft prognostiziert.

In Verfahrensschritt 404 wird die Differenz aus dem Wert aus Verfahrensschritt 403 für die prognostizierte Ist-Leistung des Gesamtenergiespeichers 7 und dem Wert aus Verfahrensschritt 402 für die prognostizierte maximal mögliche Ladeleistung des Gesamtenergiespeichers 7 bestimmt. Dies ergibt die gesicherte Regelleistung in negativer Richtung, die vorgehalten werden kann.

Anhand der prognostizierten Einzelkapazität eines Elektrofahrzeugs der ersten Gruppe 107a und der prognostizierten Anzahl der Elektrofahrzeuge der ersten Gruppe 107a wird in Verfahrensschritt 405 die prognostizierte Gesamtkapazität der ersten Gruppe 107a für einen Zeitpunkt in der Zukunft bestimmt.

In Verfahrensschritt 406 wird anhand des prognostizierten Einzelfüllstandes eines Elektrofahrzeugs der ersten Gruppe 107a und der prognostizierten Anzahl der Elektrofahrzeuge der ersten Gruppe 107a der prognostizierte Füllstand der ersten Gruppe 107a für einen Zeitpunkt in der Zukunft bestimmt.

Die angepasste gesicherte Regelleistung in negativer Richtung wird in Verfahrensschritt 407 dadurch bestimmt, dass das Produkt aus dem Wert der angepassten gesicherten Regelleistung in negativer Richtung und dem Wert der negativen Sollzeitscheibe identisch ist mit der Differenz aus der prognostizierten Gesamtkapazität der ersten Gruppe 107a und dem prognostizierten Füllstand der ersten Gruppe 107a für einen Zeitpunkt in der Zukunft.

Die Werte der gesicherten Regelleistung in negativer Richtung aus Verfahrensschritt 404 und der angepassten gesicherten Regelleistung in negativer Richtung aus Verfahrensschritt 407 werden im Betrag in Verfahrensschritt 408 verglichen. Das Minimum der beiden Beträge kann in Verfahrensschritt 409 als angepasste gesicherte Regelleistung in negativer Richtung vorgehalten werden.

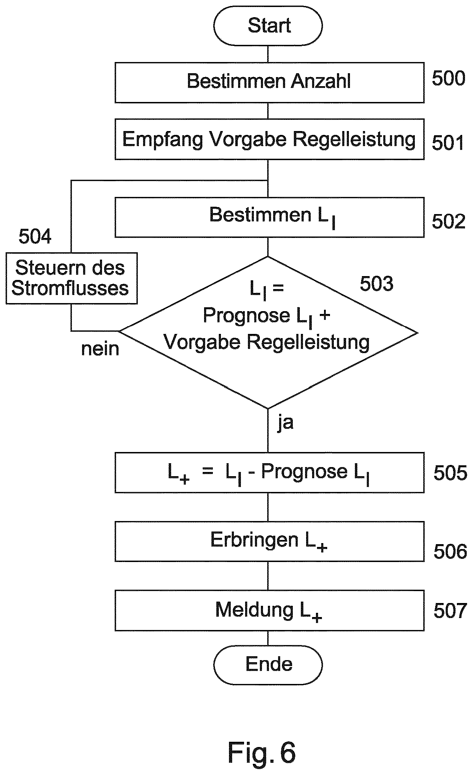

In Fig. 6 ist das Ermitteln und Erbringen einer angepassten gesicherten Regelleistung in positiver Richtung durch die Poolsteuerungseinheit 6 erläutert. Bei einer Vorgabe einer zu erbringenden Regelleistung in positiver Richtung durch den Netzbetreiber 3 über die Datenverbindung 14 wird die angepasste gesicherte Regelleistung in positiver Richtung durch Steuerung des Stromflusses 12 erbracht. Die Steuerung geschieht über die Datenverbindung 13 zwischen der Poolsteuerungseinheit 6 und dem Gesamtenergiespeicher 7.

Im Folgenden werden Leistungen in Megawatt (MW) Kapazitäten in Megawattstunden (MWh) und Zeiten in Stunden (h) gemessen.

In Verfahrensschritt 500 wird die Anzahl der Elektrofahrzeuge in der ersten Gruppe 107a und die jeweiligen Anzahl der Elektrofahrzeuge in den Untergruppen 107c - 107e bestimmt. Diese Werte fließen in zukünftige Prognosen ein, um dadurch eine Verbesserung der Prognosen zu erreichen.

In Verfahrensschritt 501 wird die zu erbringende Regelleistung in positiver Richtung vom Netzbetreiber 3 über die Datenverbindung 14 vorgegeben und durch die Poolsteuerungseinheit 6 empfangen.

In Verfahrensschritt 502 wird der Wert für die Ist-Leistung bestimmt. Die Ist-Leistung gibt diejenige Leistung an, die in Form eines Stromflusses von dem Gesamtenergiespeicher 7 in das Energieversorgungsnetz 1 eingespeist oder durch den Gesamtenergiespeicher 7 vom Energieversorgungsnetz 1 bezogen wird.

In Verfahrensschritt 503 wird die ermittelte Ist-Leistung mit der Summe aus der Vorgabe für die zu erbringende Regelleistung in positiver Richtung und der zuvor gemäß dem Verfahren aus Fig. 3 prognostizierten Ist-Leistung verglichen. Wenn die Ist-Leistung nicht der Summe aus Regelleistung in positiver Richtung und prognostizierter Ist-Leistung entspricht, ist eine Steuerung des Stromflusses notwendig. Wird eine Gleichheit festgestellt, wird mit Verfahrensschritt 505 fortgefahren.

In Verfahrensschritt 504 wird von der Poolsteuerungseinheit 6 mit Hilfe der Steuerungsmittel 119 über die Datenverbindung 113a in Fig. 2 der Stromfluss 12 gesteuert. Steuern bedeutet das Erhöhen oder Verringern des Stromflusses 12.

In Verfahrensschritt 505 wird die an den Netzbetreiber zu meldende Regelleistung in positiver Richtung aus der bestimmten Ist-Leistung abzüglich der prognostizierten Ist-Leistung ermittelt.

In Verfahrensschritt 506 wird die Regelleistung in positiver Richtung erbracht. Dieses Erbringen besteht darin, dass die Poolsteuerungseinheit 6 einen Stromfluss 12 in positiver Richtung, das heißt in das elektrische Energieversorgungsnetz 1 steuert.

Dieser Wert wird über die Datenverbindung 14 von der Poolsteuerungseinheit 6 an den Netzbetreiber 3 als Regelleistung in positiver Richtung in Verfahrensschritt 507 übermittelt.

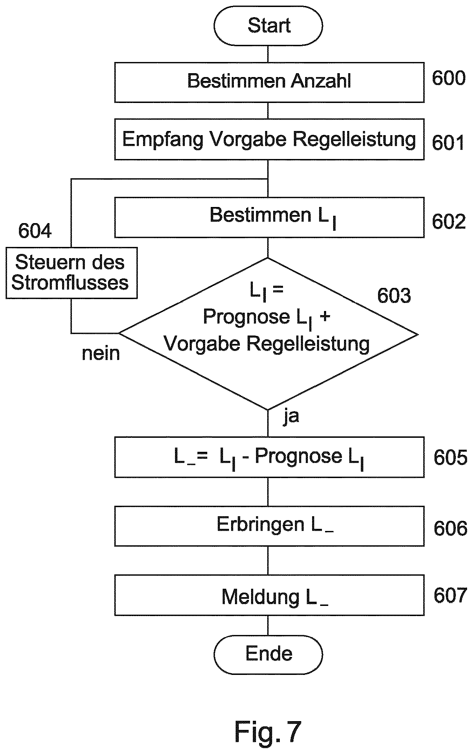

In Fig. 7 ist das Ermitteln und Erbringen einer angepassten gesicherten Regelleistung in negativer Richtung durch die Poolsteuerungseinheit 6 erläutert. Bei einer Vorgabe einer zu erbringenden Regelleistung in negativer Richtung durch den Netzbetreiber 3 über die Datenverbindung 14 wird die angepasste gesicherte Regelleistung in negativer Richtung durch Steuerung des Stromflusses 12 erbracht. Die Steuerung geschieht über die Datenverbindung 13 zwischen der Poolsteuerungseinheit 6 und dem Gesamtenergiespeicher 7.

Im Folgenden werden Leistungen in Megawatt (MW) Kapazitäten in Megawattstunden (MWh) und Zeiten in Stunden (h) gemessen.

In Verfahrensschritt 600 wird die Anzahl der Elektrofahrzeuge in der ersten Gruppe 107a und die jeweiligen Anzahl der Elektrofahrzeuge in den Untergruppen 107c - 107e bestimmt. Diese Werte fließen in zukünftige Prognosen ein, um dadurch eine Verbesserung der Prognosen zu erreichen.

In Verfahrensschritt 601 wird die zu erbringende Regelleistung in negativer Richtung vom Netzbetreiber 3 über die Datenverbindung 14 vorgegeben und durch die Poolsteuerungseinheit 6 empfangen.

In Verfahrensschritt 602 wird der Wert für die Ist-Leistung bestimmt. Die Ist-Leistung gibt diejenige Leistung an, die in Form eines Stromflusses von dem Gesamtenergiespeicher 7 in das Energieversorgungsnetz 1 eingespeist oder durch den Gesamtenergiespeicher 7 vom Energieversorgungsnetz 1 bezogen wird.

In Verfahrensschritt 603 wird die ermittelte Ist-Leistung mit der Summe aus der Vorgabe für die zu erbringende Regelleistung in negativer Richtung und der zuvor gemäß dem Verfahren aus Fig. 3 prognostizierten Ist-Leistung verglichen. Wenn die Ist-Leistung nicht der Summe aus Regelleistung in negativer Richtung und prognostizierter Ist-Leistung entspricht, ist eine Steuerung des Stromflusses notwendig. Wird eine Gleichheit festgestellt, wir mit Verfahrensschritt 605 fortgefahren.

In Verfahrensschritt 604 wird von der Poolsteuerungseinheit 6 mit Hilfe der Steuerungsmittel 119 über die Datenverbindung 113a in Fig. 2 der Stromfluss 12 gesteuert. Steuern bedeutet das Erhöhen oder Verringern des Stromflusses 12.

In Verfahrensschritt 605 wird die an den Netzbetreiber zu meldende Regelleistung in negativer Richtung aus der bestimmten Ist-Leistung abzüglich der prognostizierten Ist-Leistung ermittelt.

In Verfahrensschritt 606 wird die Regelleistung in negativer Richtung erbracht. Dieses Erbringen besteht darin, dass die Poolsteuerungseinheit 6 einen Stromfluss 12 in negativer Richtung, das heißt aus dem elektrischen Energieversorgungsnetz 1, steuert.

Dieser Wert wird über die Datenverbindung 14 von der Poolsteuerungseinheit 6 an den Netzbetreiber 3 als Regelleistung in negativer Richtung in Verfahrensschritt 607 übermittelt.

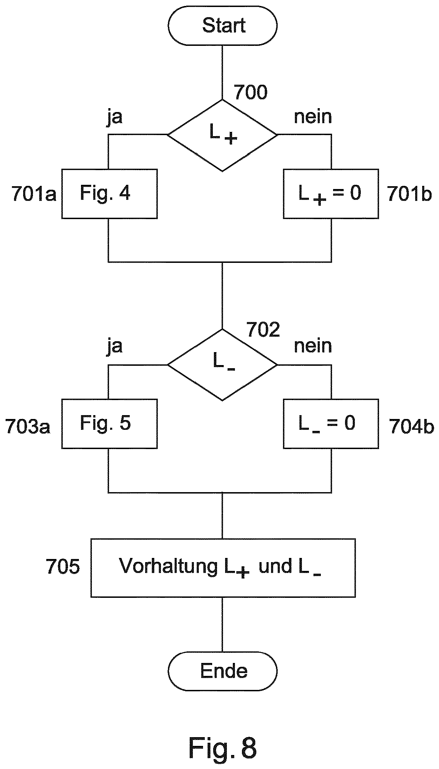

In Fig. 8 ist das Vorhalten einer angepassten gesicherten Regelleistung in beliebiger Richtung erläutert. In Verfahrensschritt 700 wird geprüft, ob für einen zukünftigen Zeitpunkt eine angepasste gesicherte Regelleistung in positiver Richtung vorgehalten werden soll. Wird dies bejaht, wird in Verfahrensschritt 701a das Verfahren aus Fig. 4 durchgeführt. Ansonsten wird in Verfahrensschritt 701b der Wert für die angepasste gesicherte Regelleistung in positiver Richtung gleich 0 MW gesetzt.

In Verfahrensschritt 702 wird geprüft, ob für einen zukünftigen Zeitpunkt eine angepasste gesicherte Regelleistung in negativer Richtung vorgehalten werden soll. Wird dies bejaht, wird in Verfahrensschritt 703a das erfindungsgemäße Verfahren aus Fig. 5 durchgeführt. Ansonsten wird in Verfahrensschritt 703b der Wert für die angepasste gesicherte Regelleistung in negativer Richtung gleich 0 MW gesetzt.

In Verfahrensschritt 705 wird eine angepasste gesicherte Regelleistung für einen zukünftigen Zeitpunkt vorgehalten.

## Patentansprüche

1. Verfahren zum Erbringen einer Regelleistung für ein elektrisches Energieversorgungsnetz (1, 101) mit einer Mehrzahl von Energieerzeugern, einer Mehrzahl von Energieabnehmern und einer Poolsteuerungseinheit (6, 106), **gekennzeichnet durch**
Bereitstellen eines Gesamtenergiespeichers (7), der eine Mehrzahl von bidirektional an das elektrische Energieversorgungsnetz (1, 101) koppelbaren Elektrofahrzeugen mit jeweils mindestens einem Energiespeicher umfasst;
Bestimmen, zu einem ersten Zeitpunkt, der vor einem zweiten Zeitpunkt liegt, einer Ist-Leistung des Gesamtenergiespeichers (7) zu dem zweiten Zeitpunkt als die Summe einer prognostizierten Leistung einer ersten Gruppe (107a) von Elektrofahrzeugen zu dem zweiten Zeitpunkt und einer prognostizierten Leistung einer zweiten Gruppe (107b) von Elektrofahrzeugen zu dem zweiten Zeitpunkt, wobei
die erste Gruppe (107a) diejenigen Elektrofahrzeuge umfasst, deren Stromfluss betragsmäßig und richtungsmäßig von der Poolsteuerungseinheit (6, 106) verändert werden kann und deren Energiespeicher zum jeweiligen Zeitpunkt steuerbar an das elektrische Energieversorgungsnetz (1, 101) gekoppelt sind, um einen Stromfluss zwischen den entsprechenden Energiespeichern und dem elektrischen Energieversorgungsnetz (1, 101) zu verändern;
die zweite Gruppe (107b) diejenigen Elektrofahrzeuge umfasst, die nicht in der ersten Gruppe (107a) sind, wobei
der Gesamtenergiespeicher (7) über Eingabegeräte (16) zum Festlegen einer reservierten Kapazität verfügt, wobei jedes Elektrofahrzeug, durch Festlegen eines Nutzers des Elektrofahrzeugs, jederzeit zwischen der ersten und zweiten Gruppe (107b) wechseln kann, und wobei
der Nutzer des Elektrofahrzeugs über ein Belohnungssystem motiviert wird, so oft wie möglich das Elektrofahrzeug der ersten Gruppe (107a) zuzuordnen;
Bestimmen, zu dem ersten Zeitpunkt, einer maximal möglichen Entladeleistung des Gesamtenergiespeichers (7) zu dem zweiten Zeitpunkt als die Summe einer prognostizierten maximal möglichen Entladeleistung der ersten Gruppe (107a) von Elektrofahrzeugen zu dem zweiten Zeitpunkt und einer prognostizierten maximal möglichen Entladeleistung der zweiten Gruppe (107b) von Elektrofahrzeugen zu dem zweiten Zeitpunkt;
Bestimmen, zu dem ersten Zeitpunkt, einer gesicherten Regelleistung in positiver Richtung zu dem zweiten Zeitpunkt als Differenz aus der Ist-Leistung des Gesamtenergiespeichers (7) zu dem zweiten Zeitpunkt und der maximal möglichen Entladeleistung des Gesamtenergiespeichers (7) zu dem zweiten Zeitpunkt.

2. Verfahren nach Anspruch 1, **gekennzeichnet durch**
Bestimmen, zu dem ersten Zeitpunkt, einer Gesamtkapazität der ersten Gruppe (107a) zu dem zweiten Zeitpunkt aus einer Aggregation der prognostizierten Einzelkapazitäten der Elektrofahrzeuge der ersten Gruppe (107a) zu dem zweiten Zeitpunkt;
Bestimmen, zu dem ersten Zeitpunkt, einer reservierten Kapazität der ersten Gruppe (107a) zu dem zweiten Zeitpunkt aus einer Aggregation der reservierten Einzelkapazitäten der Elektrofahrzeuge der ersten Gruppe (107a) zu dem zweiten Zeitpunkt;
Bestimmen, zu dem ersten Zeitpunkt, eines Füllstandes der ersten Gruppe (107a) zu dem zweiten Zeitpunkt aus einer Aggregation der prognostizierten Einzelfüllstände der Elektrofahrzeuge der ersten Gruppe (107a) zu dem zweiten Zeitpunkt.

3. Verfahren nach Anspruch 2, **gekennzeichnet durch**
Bestimmen, zu dem ersten Zeitpunkt, einer maximal möglichen Lade-leistung des Gesamtenergiespeichers (7) zu dem zweiten Zeitpunkt als die Summe einer prognostizierten maximal möglichen Ladeleistung der ersten Gruppe (107a) von Elektrofahrzeugen zu dem zweiten Zeitpunkt und einer prognostizierten maximal möglichen Ladeleistung der zweiten Gruppe (107b) von Elektrofahrzeugen zu dem zweiten Zeitpunkt;
Bestimmen, zu dem ersten Zeitpunkt, einer gesicherten Regelleistung in negativer Richtung zu dem zweiten Zeitpunkt als Differenz aus der Ist-Leistung des Gesamtenergiespeichers (7) zu dem zweiten Zeitpunkt und der maximal möglichen Ladeleistung des Gesamtenergiespeichers (7) zu dem zweiten Zeitpunkt.

4. Verfahren nach Anspruch 2 oder 3, **gekennzeichnet durch**
Ermitteln, zu dem ersten Zeitpunkt, einer angepassten gesicherten Leistung in positiver Richtung für den zweiten Zeitpunkt, gegeben durch den Quotienten aus einer positiven Kapazität, bestimmt durch die Differenz aus dem Füllstand der ersten Gruppe (107a) zu dem zweiten Zeitpunkt und der reservierten Kapazität der ersten Gruppe (107a) zu dem zweiten Zeitpunkt, und der Zeit einer vorgegebenen positiven Sollzeitscheibe.

5. Verfahren nach Anspruch 3 oder 4, **gekennzeichnet durch**
Ermitteln, zu dem ersten Zeitpunkt, einer angepassten gesicherten Leistung in negativer Richtung für den zweiten Zeitpunkt, gegeben durch den Quotienten aus einer negativen Kapazität, bestimmt durch die Differenz Gesamtkapazität der ersten Gruppe (107a) zu dem zweiten Zeitpunkt und aus dem Füllstand der ersten Gruppe (107a) zu dem zweiten Zeitpunkt, und der Zeit einer vorgegebenen negativen Sollzeitscheibe.

6. Verfahren nach einem der Ansprüche 1-5, wobei die zweite Gruppe von Elektrofahrzeugen eine erste, zweite und dritte Untergruppe aufweist,
wobei die erste Untergruppe die Elektrofahrzeuge der zweiten Gruppe (107b) umfasst, die sich in einem selbstgesteuerten Ladevorgang befinden,
wobei die zweite Untergruppe die Elektrofahrzeuge der zweiten Gruppe (107b) umfasst, die Strom beziehen, ohne den Energiespeicher zu laden, und
wobei die dritte Untergruppe die Elektrofahrzeuge der zweiten Gruppe (107b) umfasst, die nicht mit dem elektrischen Energieversorgungsnetz (1, 101) verbunden sind.

7. Verfahren nach Anspruch 6, wobei jedes Elektrofahrzeug zwischen der ersten und der zweiten Gruppe (107b) wechseln kann, und/oder wobei
jedes Elektrofahrzeug zwischen dem ersten, dem zweiten und dem dritten Unterzustand wechseln kann.

8. Verfahren nach einem der Ansprüche 1-7, wobei die prognostizierten Werte für die Leistung, die maximal mögliche Ladeleistung, die maximal mögliche Entladeleistung, die Einzelkapazitäten und die Einzelfüllstände auf historisierten Erfahrungswerten basierende statistisch ermittelte Werte sind.

9. Verfahren nach Anspruch 8, wobei die Werte für die reservierten Einzelkapazitäten von Benutzern der Elektrofahrzeuge aus der ersten Gruppe (107a) zu einem Zeitpunkt vor dem ersten Zeitpunkt festgelegte Werte sind und/oder auf historisierten Erfahrungswerten basierende statistisch ermittelte Werte sind.

10. Verfahren nach einem der Ansprüche 1-9, wobei dem Gesamtenergiespeicher (7) zusätzlich eine Mehrzahl von steuerbar an das elektrische Energieversorgungsnetz (1, 101) koppelbare elektrische Einheiten, die keine Elektrofahrzeuge sind, hinzugefügt werden, und
wobei die elektrischen Einheiten wie die Elektrofahrzeuge der ersten Gruppe (107a) behandelt werden.

11. System zum Erbringen einer Regelleistung für ein elektrisches Energieversorgungsnetz (1, 101) mit einer Mehrzahl von Energieerzeugern, einer Mehrzahl von Energieabnehmern und einer Poolsteuerungseinheit (6, 106), umfassend:
einen Gesamtenergiespeicher (7), der eine Mehrzahl von bidirektional an das elektrische Energieversorgungsnetz (1, 101) koppelbaren Elektrofahrzeugen mit jeweils mindestens einem Energiespeicher umfasst;
Mittel zum Bestimmen, zu einem ersten Zeitpunkt, der vor einem zweiten Zeitpunkt liegt, einer Ist-Leistung des Gesamtenergiespeichers (7) zu dem zweiten Zeitpunkt als die Summe einer prognostizierten Leistung einer ersten Gruppe (107a) von Elektrofahrzeugen zu dem zweiten Zeitpunkt und einer prognostizierten Leistung einer zweiten Gruppe (107b) von Elektrofahrzeugen zu dem zweiten Zeitpunkt, wobei
die erste Gruppe diejenigen Elektrofahrzeuge umfasst, deren Energiespeicher zum jeweiligen Zeitpunkt steuerbar an das elektrische Energieversorgungsnetz (1, 101) gekoppelt sind, um einen Stromfluss zwischen den entsprechenden Energiespeichern und dem elektrischen Energieversorgungsnetz (1, 101) zu verändern;
die zweite Gruppe diejenigen Elektrofahrzeuge umfasst, die nicht in der ersten Gruppe (107a) sind, wobei
der Gesamtenergiespeicher (7) über Eingabegeräte (16) zum Festlegen einer reservierten Kapazität verfügt, wobei jedes Elektrofahrzeug, durch Festlegen eines Nutzers des Elektrofahrzeugs, jederzeit zwischen der ersten und zweiten Gruppe (107b) wechseln kann, und wobei
der Nutzer des Elektrofahrzeugs über ein Belohnungssystem motiviert wird, so oft wie möglich das Elektrofahrzeug der ersten Gruppe (107a) zuzuordnen;
Mittel zum Bestimmen, zu dem ersten Zeitpunkt, einer maximal möglichen Entladeleistung des Gesamtenergiespeichers (7) zu dem zweiten Zeit-punkt als die Summe einer prognostizierten maximal möglichen Entladeleistung der ersten Gruppe (107a) von Elektrofahrzeugen zu dem zweiten Zeitpunkt und einer prognostizierten maximal möglichen Entladeleistung der zweiten Gruppe (107b) von Elektrofahrzeugen zu dem zweiten Zeitpunkt;
Mittel zum Bestimmen, zu dem ersten Zeitpunkt, einer gesicherten Regelleistung in positiver Richtung zu dem zweiten Zeitpunkt als Differenz aus der Ist-Leistung des Gesamtenergiespeichers (7) zu dem zweiten Zeitpunkt und der maximal möglichen Entladeleistung des Gesamtenergiespeichers (7) zu dem zweiten Zeitpunkt.

12. System nach Anspruch 11, umfassend Mittel zum Ausführen des Verfahrens nach einem der Ansprüche 1-10.

## Claims

1. Method for providing a regulating power for an electrical energy supply network (1, 101) with a plurality of energy generators, a plurality of energy consumers and a pool control unit (6, 106), **characterised by**
providing an overall energy store (7) which comprises a plurality of electric vehicles which are bidirectionally coupleable to the electrical energy supply network (1, 101), each having at least one energy store;
determining, at a first time point which lies before a second time point, an actual power level of the overall energy store (7) at the second time point as the sum of a predicted power level of a first group (107a) of electric vehicles at the second time point and a predicted power level of a second group (107b) of electric vehicles at the second time point, wherein
the first group (107a) comprises the electric vehicles the current flow of which can be changed with regard to quantity and direction by the pool control unit (6, 106) and the energy stores of which are controllably coupled to the electrical energy supply network (1, 101) at the respective time point, in order to change a current flow between the relevant energy stores and the electrical energy supply network (1, 101);
the second group (107b) comprises the electric vehicles which are not in the first group (107a), wherein
the overall energy store (7) has input devices (16) for determining a reserved capacity, wherein each electric vehicle can change at any time between the first and the second group (107b) by specifying a user of the electric vehicle, and wherein
the user of the electric vehicle is motivated by means of a reward system to assign the electric vehicle to the first group (107a) as often as possible;
determining, at the first time point, a maximum possible discharge power of the overall energy store (7) at the second time point as the sum of a predicted maximum possible discharge power of the first group (107a) of electric vehicles at the second time point and a predicted maximum possible discharge power of the second group (107b) of electric vehicles at the second time point;
determining, at the first time point, an assured regulating power in the positive direction at the second time point as the difference between the actual power level of the overall energy store (7) at the second time point and the maximum possible discharge power of the overall energy store (7) at the second time point.

2. Method according to claim 1, **characterised by**
determining, at the first time point, an overall capacity of the first group (107a) at the second time point from an aggregation of the predicted individual capacities of the electric vehicles of the first group (107a) at the second time point;
determining, at the first time point, a reserved capacity of the first group (107a) at the second time point from an aggregation of the reserved individual capacities of the electric vehicles of the first group (107a) at the second time point;
determining, at the first time point, a fill level of the first group (107a) at the second time point from an aggregation of the predicted individual fill levels of the electric vehicles of the first group (107a) at the second time point.

3. Method according to claim 2, **characterised by**
determining, at the first time point, a maximum possible charge power of the overall energy store (7) at the second time point as the sum of a predicted maximum possible charge power of the first group (107a) of electric vehicles at the second time point and a predicted maximum possible charge power of the second group (107b) of electric vehicles at the second time point;
determining, at the first time point, an assured regulating power in a negative direction at the second time point as the difference between the actual power level of the overall energy store (7) at the second time point and the maximum possible discharge power of the overall energy store (7) at the second time point.

4. Method according to claim 2 or 3, **characterised by**
determining, at the first time point, an adapted assured power level in the positive direction for the second time point, given by the quotients of a positive capacity, determined by the difference between the fill level of the first group (107a) at the second time point and the reserved capacity of the first group (107a) at the second time point, and the time of a predetermined positive target time slice.

5. Method according to claim 3 or 4, **characterised by**
determining, at the first time point, an adapted assured power level in the negative direction for the second time point, given by the quotients of a negative capacity, determined by the difference between the overall capacity of the first group (107a) at the second time point and the fill level of the first group (107a) at the second time point, and the time of a predetermined negative target time slice.

6. Method according to one of the claims 1-5, wherein the second group of electric vehicles has a first, second and third subgroup,
wherein the first subgroup comprises the electric vehicles of the second group (107b) which are engaged in a self-controlled charging process,
wherein the second subgroup comprises the electric vehicles of the second group (107b) which are drawing current without charging the energy store, and
wherein the third subgroup comprises the electric vehicles of the second group (107b) which are not connected to the electrical energy supply network (1, 101).

7. Method according to claim 6, wherein each electric vehicle can change between the first and the second group (107b), and/or wherein
each electric vehicle can change between the first, the second and the third substate.

8. Method according to one of the claims 1-7, wherein the predicted values for the power level, the maximum possible charge power, the maximum possible discharge power, the individual capacities and the individual fill levels are statistically determined values based upon historic empirical values.

9. Method according to claim 8, wherein the values for the reserved individual capacities are values specified by users of the electric vehicles from the first group (107a) at a time point before the first time point and/or are statistically determined values based upon historic empirical values.

10. Method according to one of the claims 1-9, wherein additionally a plurality of controllable electrical units which are not electric vehicles and are couplable to the electrical energy supply network (1, 101) are added to the overall energy store (7), and
wherein the electrical units are treated like the electric vehicles of the first group (107a).

11. System for providing a regulating power for an electrical energy supply network (1, 101) with a plurality of energy generators, a plurality of energy consumers and a pool control unit (6, 106), comprising:
an overall energy store (7) which comprises a plurality of electric vehicles which are bidirectionally coupleable to the electrical energy supply network (1, 101), each having at least one energy store;
means for determining, at a first time point which lies before a second time point, an actual power level of the overall energy store (7) at the second time point as the sum of a predicted power level of a first group (107a) of electric vehicles at the second time point and a predicted power level of a second group (107b) of electric vehicles at the second time point, wherein
the first group comprises the electric vehicles the energy stores of which are coupled to the electrical energy supply network (1, 101) at the respective time point, in order to change a current flow between the relevant energy stores and the electrical energy supply network (1, 101);
the second group comprises the electric vehicles which are not in the first group (107a), wherein
the overall energy store (7) has input devices (16) for determining a reserved capacity, wherein each electric vehicle can change at any time between the first and the second group (107b) by specifying a user of the electric vehicle, and wherein
the user of the electric vehicle is motivated by means of a reward system to assign the electric vehicle to the first group (107a) as often as possible;
means for determining, at the first time point, a maximum possible discharge power of the overall energy store (7) at the second time point as the sum of a predicted maximum possible discharge power of the first group (107a) of electric vehicles at the second time point and a predicted maximum possible discharge power of the second group (107b) of electric vehicles at the second time point;
means for determining, at the first time point, an assured regulating power in the positive direction at the second time point as the difference between the actual power level of the overall energy store (7) at the second time point and the maximum possible discharge power of the overall energy store (7) at the second time point.

12. System according to claim 11 comprising means for carrying out the method according to one of the claims 1-10.

## Revendications

1. Procédé pour fournir une puissance de régulation pour un réseau d'alimentation en énergie électrique (1, 101) avec une pluralité de générateurs d'énergie, une pluralité de consommateurs d'énergie et une unité de commande partagée (6, 106), **caractérisé par**
la mise à disposition d'un accumulateur d'énergie totale (7), qui comprend une pluralité de véhicules électriques, pouvant être couplés de manière bidirectionnelle au réseau d'alimentation en énergie électrique (1, 101), avec respectivement au moins un accumulateur d'énergie ;
la détermination, à un premier instant, précédant un deuxième instant, d'une puissance réelle de l'accumulateur d'énergie totale (7) au deuxième instant, en tant que somme d'une puissance prévue d'un premier groupe (107a) de véhicules électriques au deuxième instant et d'une puissance prévue d'un deuxième groupe (107b) de véhicules électriques au deuxième instant, dans lequel
le premier groupe (107a) comprend les véhicules électriques, dont précisément le flux de courant peut être modifié en termes de valeur et en termes de direction par l'unité de commande partagée (6, 106) et dont les accumulateurs d'énergie sont couplés à l'instant respectif de manière à pouvoir être commandés au réseau d'alimentation en énergie électrique (1, 101) pour modifier un flux de courant entre les accumulateurs d'énergie correspondants et le réseau d'alimentation en énergie électrique (1, 101) ;
le deuxième groupe (107b) comprend les véhicules électriques, qui précisément ne sont pas dans le premier groupe (107a), dans lequel
l'accumulateur d'énergie totale (7) dispose d'appareils d'entrée (16) pour fixer une capacité réservée, dans lequel chaque véhicule électrique peut passer, par fixation d'un utilisateur du véhicule électrique, à tout instant entre le premier et le deuxième groupe (107b), et dans lequel
l'utilisateur du véhicule électrique est incité par un système de récompense à associer aussi souvent que possible le véhicule électrique au premier groupe (107a) ;
la détermination, au premier instant, d'une puissance de décharge maximale possible de l'accumulateur d'énergie totale (7) au deuxième instant, en tant que somme d'une puissance de décharge maximale possible prévue du premier groupe (107a) de véhicules électriques, au deuxième instant, et d'une puissance de décharge maximale possible prévue du deuxième groupe (107b) de véhicules électriques au deuxième instant ;
la détermination, au premier instant, d'une puissance de régulation assurée dans un sens positif au deuxième instant en tant que différence entre la puissance réelle de l'accumulateur d'énergie totale (7) au deuxième instant et la puissance de décharge maximale possible de l'accumulateur d'énergie totale (7) au deuxième instant.

2. Procédé selon la revendication 1, **caractérisé par**
la détermination, au premier instant, d'une capacité totale du premier groupe (107a) au deuxième instant à partir d'une agrégation des capacités individuelles prévues des véhicules électriques du premier groupe (107a) au deuxième instant ;
la détermination, au premier instant, d'une capacité réservée du premier groupe (107a) au deuxième instant à partir d'une agrégation des capacités individuelles réservées des véhicules électriques du premier groupe (107a) au deuxième instant ;
la détermination, au premier instant, d'un état de remplissage du premier groupe (107a) au deuxième instant à partir d'une agrégation des états de remplissage individuels prévus des véhicules électriques du premier groupe (107a) au deuxième instant.

3. Procédé selon la revendication 2, **caractérisé par**
la détermination, au premier instant, d'une puissance de charge maximale possible de l'accumulateur d'énergie totale (7) au deuxième instant en tant que somme d'une puissance de charge maximale possible prévue du premier groupe (107a) de véhicules électriques au deuxième instant et d'une puissance de charge maximale possible prévue du deuxième groupe (107b) de véhicules électriques au deuxième instant ;
la détermination, au premier instant, d'une puissance de régulation assurée dans un sens négatif au deuxième instant en tant que différence entre la puissance réelle de l'accumulateur d'énergie totale (7) au deuxième instant et la puissance de charge maximale possible de l'accumulateur d'énergie totale (7) au deuxième instant.

4. Procédé selon la revendication 2 ou 3, **caractérisé par**
la détermination, au premier instant, d'une puissance assurée adaptée dans le sens positif pour le deuxième instant, donnée par le quotient entre une capacité positive, définie par la différence entre l'état de remplissage du premier groupe (107a) au deuxième instant et la capacité réservée du premier groupe (107a) au deuxième instant et le temps d'une tranche horaire théorique positive spécifiée.

5. Procédé selon la revendication 3 ou 4, **caractérisé par**
la détermination, au premier instant, d'une puissance assurée adaptée dans le sens négatif pour le deuxième instant, donnée par le quotient entre une capacité négative, définie par la différence entre la capacité globale du premier groupe (107a) au deuxième instant et l'état de remplissage du premier groupe (107a) au deuxième instant, et le temps d'une tranche horaire théorique négative spécifiée.

6. Procédé selon l'une quelconque des revendications 1 - 5, dans lequel le deuxième groupe de véhicules électriques présente un premier, un deuxième et un troisième sous-groupe,
dans lequel le premier sous-groupe comprend les véhicules électriques du deuxième groupe (107b) qui se trouvent dans une opération de charge à commande automatique,
dans lequel le deuxième sous-groupe comprend les véhicules électriques du deuxième groupe (107b), qui s'approvisionnent en courant sans charger l'accumulateur d'énergie, et
dans lequel le troisième sous-groupe comprend les véhicules électriques du deuxième groupe (107b) qui ne sont pas raccordés au réseau d'alimentation en énergie électrique (1, 101).

7. Procédé selon la revendication 6, dans lequel chaque véhicule électrique peut passer entre le premier et le deuxième groupe (107b), et/ou dans lequel
chaque véhicule électrique peut passer entre le premier, le deuxième et le troisième état inférieur.

8. Procédé selon l'une quelconque des revendications 1 - 7, dans lequel les valeurs prévues pour la puissance, la puissance de charge maximale possible, la puissance de décharge maximale possible, les capacités individuelles et les états de remplissage individuels sont des valeurs déterminées de manière statistique sur la base de valeurs empiriques consignées.

9. Procédé selon la revendication 8, dans lequel les valeurs pour les capacités individuelles réservées d'utilisateurs des véhicules électriques issus du premier groupe (107a) sont des valeurs fixées à un instant avant le premier instant et/ou sont des valeurs déterminées de manière statistique basées sur des valeurs empiriques consignées.

10. Procédé selon l'une quelconque des revendications 1 - 9, dans lequel en outre une pluralité d'unités électriques pouvant être couplées de manière à pouvoir être commandées au réseau d'alimentation en énergie électrique (1, 101), qui ne sont pas des véhicules électriques, sont ajoutées à l'accumulateur d'énergie totale (7),
dans lequel les unités électriques sont traitées comme les véhicules électriques du premier groupe (107a).

11. Système pour fournir une puissance de régulation pour un réseau d'alimentation en énergie électrique (1, 101) avec une pluralité de générateurs d'énergie, une pluralité de consommateurs d'énergie et une unité de commande partagée (6, 106), comprenant :
un accumulateur d'énergie totale (7), qui comprend une pluralité de véhicules électriques, pouvant être couplés de manière bidirectionnelle au réseau d'alimentation en énergie électrique (1, 101), avec au moins un accumulateur d'énergie ;
des moyens pour définir, à un premier instant, précédant un deuxième instant, une puissance réelle de l'accumulateur d'énergie totale (7) au deuxième instant en tant que somme d'une puissance prévue d'un premier groupe (107a) de véhicules électriques au deuxième instant et d'une puissance prévue d'un deuxième groupe (107b) de véhicules électriques au deuxième instant, dans lequel
le premier groupe comprend les véhicules électriques, dont précisément les accumulateurs d'énergie sont couplés à l'instant respectif de manière à pouvoir être commandés au réseau d'alimentation en énergie électrique (1, 101) pour modifier un flux de courant entre les accumulateurs d'énergie correspondants et le réseau d'alimentation en énergie électrique (1, 101) ;
le deuxième groupe comprend les véhicules électriques qui précisément ne sont pas dans le premier groupe (107a), dans lequel
l'accumulateur d'énergie totale (7) dispose d'appareils d'entrée (16) pour fixer une capacité réservée, dans lequel chaque véhicule électrique peut passer, par fixation d'un utilisateur du véhicule électrique, à tout instant entre le premier et le deuxième groupe (107b), et dans lequel
l'utilisateur du véhicule électrique est incité par un système de récompense à associer aussi souvent que possible le véhicule électrique au premier groupe (107a) ;
des moyens pour définir, au premier instant, une puissance de décharge maximale possible de l'accumulateur d'énergie totale (7) au deuxième instant en tant que somme d'une puissance de décharge maximale possible prévue du premier groupe (107a) de véhicules électriques au deuxième instant et d'une puissance de décharge maximale possible prévue du deuxième groupe (107b) de véhicules électriques au deuxième instant ;
des moyens pour définir, au premier instant, une puissance de régulation assurée dans un sens positif au deuxième instant en tant que différence entre la puissance réelle de l'accumulateur d'énergie totale (7) au deuxième instant et la puissance de décharge maximale possible de l'accumulateur d'énergie totale (7) au deuxième instant.

12. Système selon la revendication 11, comprenant des moyens pour exécuter le procédé selon l'une quelconque des revendications 1-10.
